# EUROPEAN PATENT SPECIFICATION

(11) **EP 4 015 176 B1**
(45) Date of publication and mention of the grant of the patent: **07.06.2023**
(21) Application number: 21215493.4
(22) Date of filing: 17.12.2021
(51) Int. Cl.: B29B 7/76, B29B 7/72, B29B 7/32, B29B 7/80, B29C 67/24, B29C 70/44, B29C 70/54

(54) **INFUSION METHOD AND APPARATUS FOR OBTAINING BODIES MADE OF REINFORCED COMPOSITE MATERIAL**
INFUSIONSVERFAHREN UND VORRICHTUNG ZUR HERSTELLUNG VON KÖRPERN AUS VERSTÄRKTEM VERBUNDMATERIAL
PROCÉDÉ ET APPAREIL DE PERFUSION POUR OBTENIR DES CORPS EN MATÉRIAU COMPOSITE RENFORCÉ

(30) Priority: 17.12.2020 IT 202000031304
(43) Date of publication of application: 22.06.2022
(73) Proprietor: Afros S.p.A., 20121 Milano (IT)
(72) Inventor: Volpato, Marco, 20121 Milano (IT); Bonansea, Alberto, 20121 Milano (IT)
(74) Representative: Luppi Intellectual Property S.r.l.

(56) References cited:
- EP-A1- 3 296 088
- DE-A1- 3 021 095
- DE-A1-102011 051 236
- JP-A- S6 071 219
- US-A- 4 195 527
- US-A1- 2012 123 598
- US-A1- 2014 333 008

## Description

### BACKGROUND OF THE INVENTION

The present invention relates to a method and an apparatus for obtaining, by infusion of a reacting mixture under vacuum conditions, a body made of composite fibre-reinforced material, such as a wind blade, a hull, tank and swimming pool structures and other structures of medium or large dimensions.

### PRIOR ART

For the manufacture of bodies of large dimensions made of composite fibre-reinforced material, the use of a resin infusion technology in vacuum conditions is known. The resin can be an unsaturated polyester, a vinyl ester, an epoxy resin or polyurethane.

According to this infusion technology, there is first a laying operation - on a mould that copies part of the outer surface of the product to be obtained and can be upwardly concave - of one or more layers of glass fibres or other woven, one-directional, crossed, nonwoven fibres intended to be impregnated by the resin.

To the surface outside the mould, above the fibres, a sheet or film of transparent plastic is applied acting as a barrier for the air and the resin that is peripherally connected in an airtight manner to the mould by a double-sided adhesive tape or by a putty. Along the peripheral zone of this barrier film, air suction pipes are connected, provided with respective stopcocks and connected to a vacuum pump to produce in the gap defined between the barrier film and the inner surface of the mould and housing the fibres a vacuum condition that is generally below 6-10 absolute millibars, by air suction.

The inner pressure drop subjects the barrier film to the action of the external pressure, leading to compacting of the layers of fibre, and also of the resin entering during impregnation, against the contrasting surface of the mould.

In currently used systems, dosing units are used that are provided with synchronized gear or piston pumps to ensure dosing in a desired stoichiometric resin and hardener ratio.

The resin and the hardener stored in suitable reservoirs are removed and dosed by volumetric pumps to be sent to a mixing head.

The reacting mixture dispensed by the mixing head is poured into an open storage container in which the mixture is then at atmospheric pressure.

The reacting resin has a formulation that is such as to imply a very slow reaction, with a latency time that is significant and sufficient to ensure that the reacting mixture remains for a long time in liquid state in the aforesaid open storage container, preventing the formation of layers of reacted, i.e. solidified, resin in the points in which the resin resides for a longer period.

In the open storage container, a float element or removal element is immersed from which numerous tubes branch off that are provided at the opposite end with inlet elements for entering the cavity that are connected in airtight manner to the surface of the film of barrier plastic and through which the reacting mixture can flow inside the infusion gap. The aforementioned air suction pipes are connected in an identical manner.

The pressure difference between the open storage container and the infusion gap promotes the inflow of the reacting resin from the container to the inlet points and sliding of the mixture inside the fibre layers, thus giving rise to the step of impregnating the resin from several infusion points.

In the initial instances of the entry of the mixture, under each connecting and inlet element there is an absolute pressure near zero and this induces the reacting mixture to flow at a flow rate that is directly proportional to the pressure difference between the outside and the inside of the infusion gap and inversely proportional to the hydraulic resistance that the reacting mixture meets along the respective infusion line and through the fibres under the barrier film.

The resin, flowing progressively, expands to form an impregnation zone through the fibres, spreading according to an almost circular profile, having as a centre the connecting and inlet element. The various circular impregnation zones with progressively growing edges come into reciprocal contact, adopting subsequently shapes of polygonal shape.

During this phenomenon of diffusion, the absolute pressure under each connecting and inlet element increases in function of the increasing hydraulic resistance encountered by the reacting resin during the advancement through the impregnated fibres and increases with the distance between the inlet point and the diffusion front. The absolute pressure measured at the inlet point thus increases from an initial value very near zero to approach the value of the atmospheric pressure by a law of almost exponential type over time.

Manual valves are envisaged by which an operator throttles and subsequently arrests the flow of reacting mixture along the inlet ducts in each zone of interest.

The operator further closes other specific valves placed along the pipes, which apply the vacuum as soon as the resin reaches the respective connecting points. The resin starts to flow into the connecting points drawn by the pressure drop.

The operator performs the tasks of selecting the inlet points and of the throttling thereof on the basis of two empirical features. The first feature is the visual analysis by the operator of the expansion of the front of reacting resin that accompanies impregnation of the zones underneath the transparent barrier film. The second feature is the completion of impregnation in the different zones of the product.

Unfortunately, the degree of precision and correct execution of this throttling task depend on the operator's ability and experience, and this task is rather laborious, long and expensive and time-consuming, especially for manufacturing products with numerous infusion points, which are inevitably necessary in large quantities to make structures of large dimensions. This constitutes a great limit of such known infusion systems.

Another limit of this known system arises from the difficulty of optimizing and distributing the hydraulic resistances and pressure losses that the mixture encounters during the journey from the float in the open storage container as far as the infusion gap, and the disturbance arising from the piezometric pressure jump that occurs when such an open storage container is in a lower position than the infusion and entry points in the infusion gap.

A further limit of this known system is connected to the problems that arise from the build-up and storage of the reacting mixture in the open storage container (barrel or pail).

A first problem relates to the vapours of volatile substances and to the odours and exhalations coming from such a reacting mixture stored *"open top"* that adversely affect the quality of the working environment in which the operators find themselves working and their health.

Another limit arises from the fact that, in order to prevent the build-up and reduction of latency of the reacting mixture from leading to an activation of the chemical reaction and starting prematurely hardening of the reacting resin, reduced amounts of mixture that has built up in the barrel is often worked with. In fact, it has been found that the larger the amounts of mixture contained in the barrel, the shorter latency times are, i.e. more rapid self-heating of the mass of reacting resin occurs, which anticipates the activation of the chemical reaction, which is affected by a "mass effect". For this reason, it is necessary to use resin formulations with low reactivity to long latency.

Moreover, in order to minimise the incidence of the aforementioned "mass effect", several open-top containers are used for the reacting mixture and for the distribution thereof, and this is all the more necessary the greater the dimensions of the structures to be made are, with clear operating complications in the infusion process. Further, the inevitable presence of residues of hardened resin in the containers at the end of the process, in addition to the waste of resin, involves the necessity of having to reclean or replace said containers, with clear expenditure of time and financial disadvantages.

In order to overcome the limits and drawbacks inherent in the known systems described above, the present owner proposed in the past a new solution, disclosed in EP3296088, which made possible noticeable improvement in the production of structures of medium/large dimensions by infusion of resin under vacuum conditions. Although this last solution proved to be highly effective and made it possible to successfully overcome the various limits of the prior art, ample room for improvement still exists.

### OBJECTS OF THE INVENTION

One object of the present invention is to improve current infusion systems to product bodies made of reinforced composite bodies, providing a solution that at the same time permits an increase in productivity and higher levels of quality of the obtained product.

Another object is to provide a solution that makes possible optimized consumption of resin and smaller waste thereof, also ensuring correct and effective distribution with programmed sequences of the resin, free from disturbances on the distribution caused by jumps in pressure, excessive and unbalanced load losses and presence of air bubbles trapped in the ducts. It is further intended to prevent the circulation of fragments of hardened (reacted) resin, accordingly improving the quality of the end product.

A further object is to provide a solution that is able to facilitate the tasks of operators assigned to infusion by programming the sequences and the inlet points, making the entire infusion, supervision and control cycle repetitive, thus improving working conditions and making the environment healthier and safer in which they have to operate; in particular, it is intended to avoid the diffusion into the environment of unpleasant or harmful vapours that on the other hand are generated by the free skin of open-top or non-sealed containers of the known systems described above and moreover disposal of the aforesaid containers containing the residual and unused resin left at the end of operations is avoided.

Another object is to provide a solution that ensures the production of composite material structures without defects, such as surface swelling or inner porosity.

A further object is to provide a solution structured so as to minimise the replacement of components affected by wear due to the use and flow of the resin.

A further object is to provide such a versatile solution as to decrease the number of components the operability of which is reduced by the premature hardening of the resin.

### SHORT DESCRIPTION OF THE INVENTION

These objects and further advantages are achieved by a method and an apparatus as defined in the claims.

The method and the apparatus according to the invention enable the limits described above of conventional infusion systems to be overcome and the set objects to be achieved. In particular, owing to the invention, it is possible to do without systems with bags or containers of great volume for build ups; in this manner the drawback is successfully avoided that consists of the progressive build-up of reacting resin - on the walls of the aforesaid bags or bag containers - caused by the formation of a stationary limit layer and which imposes not only frequent replacement of the same bags but also forces resins with low reactivity to be used, with consequent lengthening of process times.

The risk is also avoided that portions of reacted resin of great thickness may detach and penetrate into the distribution pipes, causing damage and problems in the circulation of the resin.

Owing to the invention, the problem is generally avoided of soiling and of the need for cleaning tasks resulting from the replacement of the build-up bags.

The sequence of filling and using the various inlet points is made programmable.

Further, with the apparatus according to the invention, it is possible to deliver the resin correctly with flow rates near zero without suffering from the flow rate disturbances and dosing errors of dosing pumps owing to the solution with flow rate subtraction.

### SHORT DESCRIPTION OF THE DRAWINGS

These and further features of the method and apparatus will be clearer from the following description, with reference to the drawings, in which:
Figure 1 is a schematic block view of the apparatus according to the invention;
Figure 2 is a view of a first portion of the apparatus according to the invention;
Figure 3 is a view of a second portion of the apparatus according to the invention;
Figure 4 is a view of a third portion of the apparatus according to the invention;
Figure 5 is a view of a fourth portion of the apparatus according to the invention;
Figure 6 shows in detail a component shown in Fig.5;
Figure 7 shows the enlargement of a detail of Fig. 5;
Figure 8 is a view of a part of the apparatus according to the invention;
Figure 9 is a view of a part of the apparatus according to the invention;
Figure 10 is a section view of a component of the apparatus according to the invention.

### DETAILED DESCRIPTION OF THE INVENTION

With reference to the enclosed figures, the apparatus 1 and the method according to the invention are disclosed below, to produce a body made of composite fibre-reinforced material by infusion of a reacting mixture under vacuum conditions.

The reacting mixture is obtained by dosing and mixing, according to a suitable stoichiometric ratio, a resin A with a hardening component B.

The reacting resin can comprise an unsaturated polyester, vinyl ester, epoxy resin, polyurethane resin.

The present apparatus and infusion method are particular indicated for manufacturing composite material structures of large dimensions, such as hulls, wind blades, structures of tanks, swimming pools, etc.

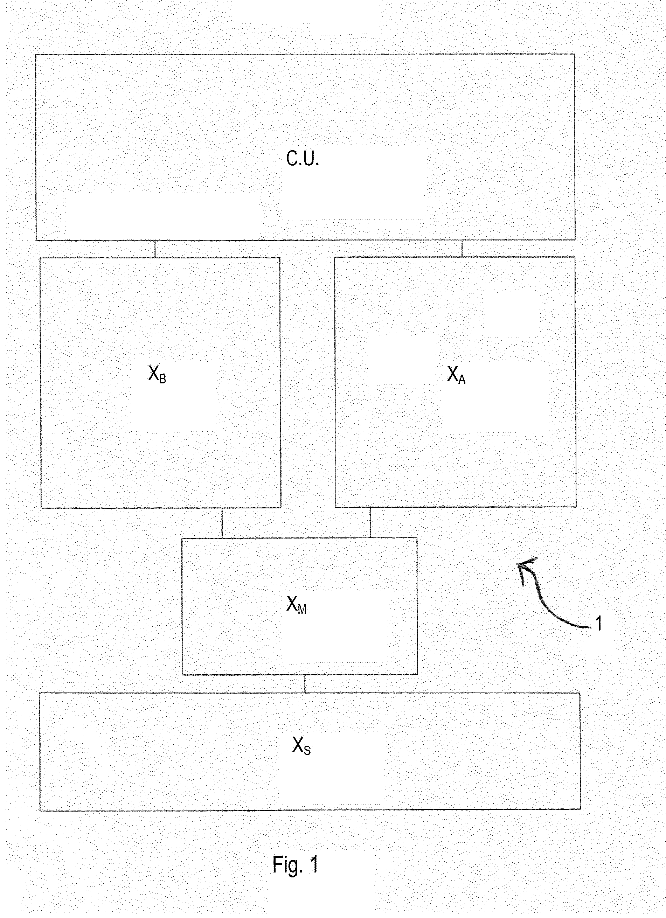

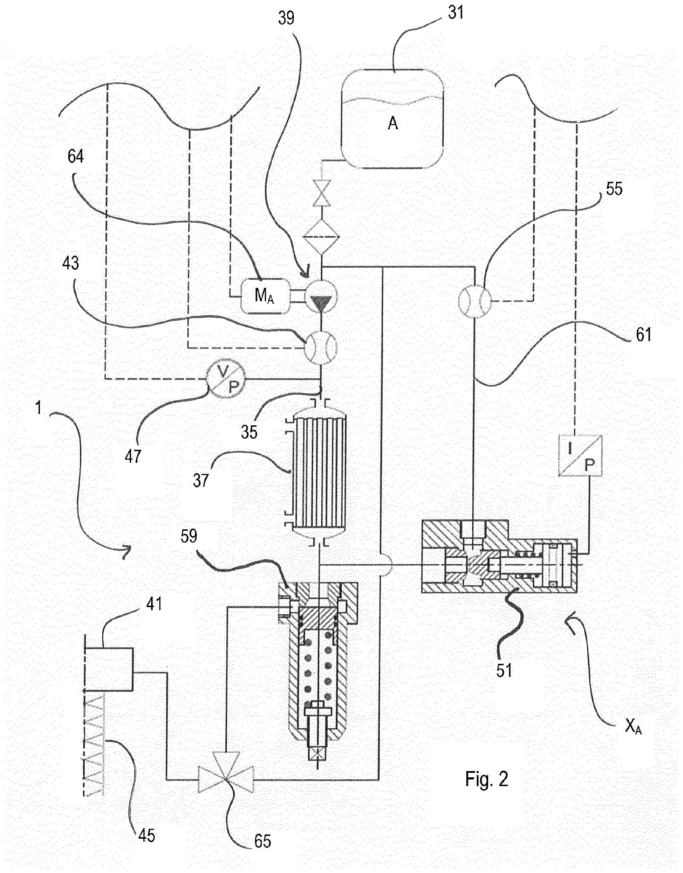

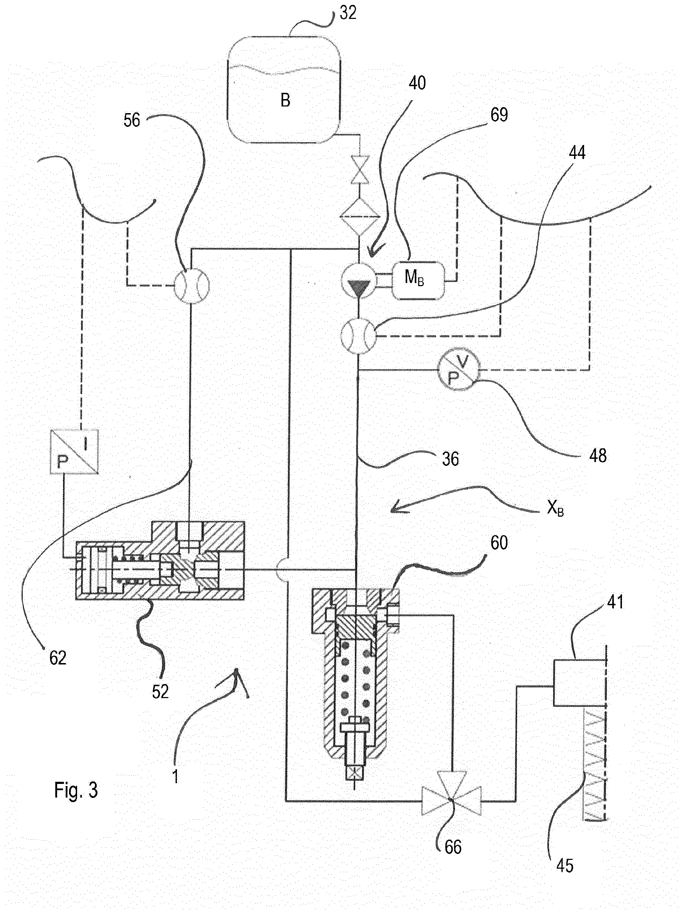

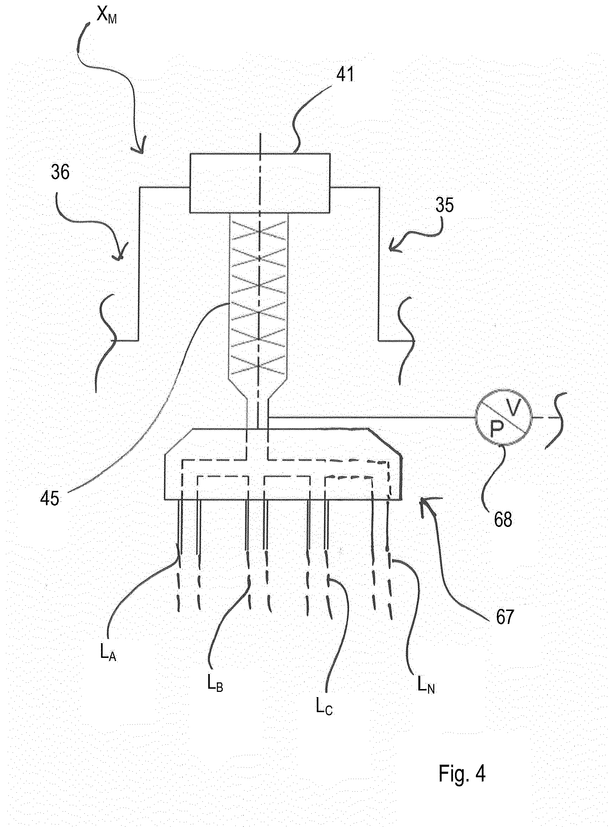

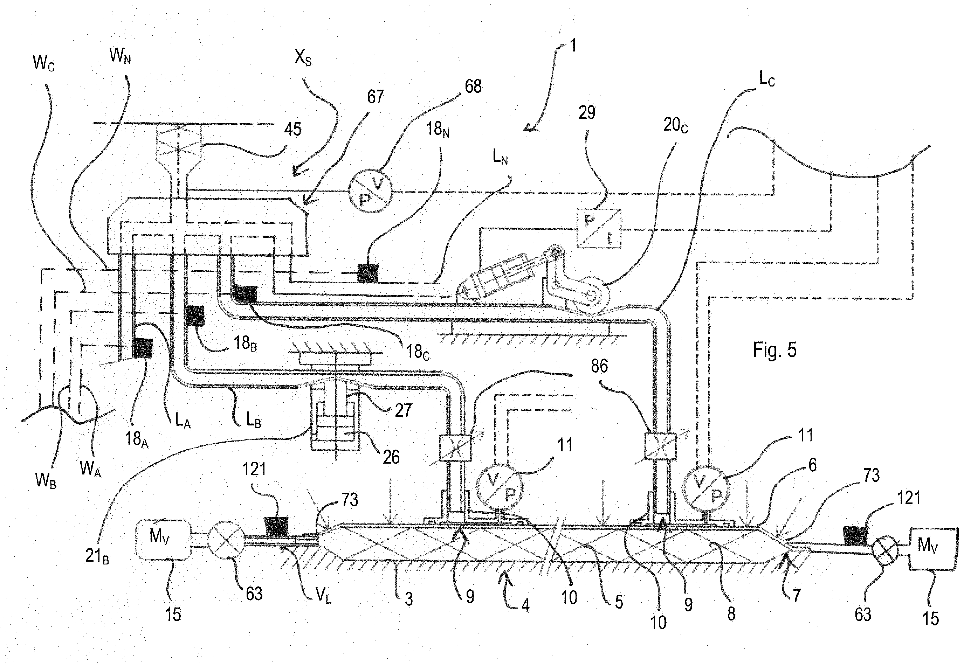

The apparatus 1 can be schematised as in Fig. 1. Block XA and block XB, shown respectively in Figs 2 and 3, represent the dosing lines respectively of the components A and B. Dosing of the components A and B is controlled by the CU block that schematises a command and control unit. The XM block, visible in Fig. 4, to which the blocks XA and XB are connected, represents schematically the mixing device of the reactive components A and B and the distribution device of the thus obtained reacting mixture. Lastly, the XS assembly, visible in Fig. 5, represents schematically the mould, the section of the product made of composite material and the corresponding infusion lines (infusion ducts) and vacuum generation lines.

The apparatus 1 comprises a heatable mould 4 having a contrasting surface 3 that can have a concave shape, or also another desired geometry or be configured like the enveloping surface of a hollow body and on which one or more fibre layers are spread that define a fibrous reinforcement support 5 intended to be impregnated with the reacting mixture.

The mould 4, in a first embodiment, is thus a mould open above.

The fibrous reinforcement support 5 can comprise a bed consisting of different superimposed layers of woven fibres or unidirectional crossed fibres or in the form of felts or *"mats"* between which the resin filters.

A barrier film 6 or cloth barrier is spread onto said fibrous reinforcement support 5, made of transparent plastic that is impermeable to air and resin.

The barrier film 6 can be sealed peripherally, by a double-sided adhesive tape or a strip of deformable dough having a putty or paste-type consistency, against the surface of a perimetral zone 7 of the mould that bounds the contrasting surface 3. Once the barrier film 6 is sealed on the mould 4, a gap or infusion cavity 8 is thus defined that is separated from the external environment.

On the barrier film 6 one or more inlet openings or points 9 are obtained for the reacting mixture and one or more air suction application openings 73 for generation of the vacuum by vacuum sources 15.

In one embodiment, the vacuum sources 15 are driven to generate within said infusion cavity 8 an internal pressure P_{INT} having a value settable from 0 to 900 absolute millibars.

As visible in Figures 2 to 4, the apparatus 1 includes a device for dosing and mixing the resin A with the hardener B.

The aforesaid device comprises volumetric pumps 39, 40 for the respective reactive components, and a mixing head 41 that includes a static mixer 45.

The resin A and the hardener B are stored respectively in suitable cubic containers 31 and 32 of the so-called *IBC* type or in closed reservoirs that can be maintained pressurised or at a pressure that is lower than the external atmospheric pressure to avoid air entrapment.

The dosing device in particular comprises a mixing head 41, provided with static mixer 45, with which volumetric pumps 39,40 for dosing and supplying respectively the resin A and the hardener B are operationally coupled.

The speed of the volumetric pumps 39, 40 is controlled and they are controlled respectively by electric motors 64 and 69, which can be of the type having brushless motors with a corresponding suitable drive or with motors of the alternating current type with inverters. Alternatively, the pumps are multiple axial or radial piston pumps with speed controlled by electric motors.

As is known, the volumetric efficiency of both gear and piston pumps depends on the leaks that occur along the pumping members, which mainly depend on the pressure differential between pump delivery and suction.

Generally, in fact, the pumped liquid flows through the spaces that are necessary for the sliding of the mechanical members that push the liquid along the delivery line. The flow rate of the liquid that flows away is defined as leak and is almost proportional to the pressure differential and inversely proportional to viscosity.

The efficiency of the pumps is calculated as a ratio between the lost flow rate and the nominal flow rate. Accordingly, at low flow rates, when the delivered nominal flow-rate value approaches the value of the leak flow rate inside the flowing spaces, efficiency becomes very low and the pumps start to deliver the use flow rate discontinuously, with variations of the pressure and variations of the delivered flow rate that can be also high and difficult to control.

The volumetric pumps 39, 40 are distinguished by a deliverable minimum flow rate Q_{MIN}, below which, as anticipated, the precision levels are reduced on the dosed quantity of delivered liquid. The deliverable minimum flow rate Q_{MIN} represents the minimum and limit flow rate value above which the dosing operating efficiency is guaranteed.

Low delivery flow rates correspond to low rotation speeds of the motor that drives the volumetric pump. Accordingly, the pump is unable to maintain the dosing operating efficiency for rotation speed values below a given value.

If the flow rates at which the liquids are delivered are lower than the deliverable minimum flow rate value Q_{MIN}, delivery is inconstant and characterised by dosage errors that are not admissible for the application. The deliverable minimum flow rate value Q_{MIN} depends on the type of pump and the rheological features of the liquid to be delivered.

As visible in Figs. 2-3, the apparatus comprises a supply line 35 for the resin A and a supply line 36 for the hardener B; the supply lines 35 and 36 connect respectively the containers 31 and 32 to the mixing head 41.

Along the supply lines 35 and 36, downstream of the volumetric pumps 39 and 40, flow rate transducers 43 and 44 are respectively present to measure the flow rates of resin A and hardener B delivered by the pumps 39 and 40 and pressure transducers 47 and 48. The transducers 43 and 44 can be of the volumetric or mass type.

Each supply line 35 and 36 comprises respectively a flow rate subtracting valve 51 and 52 with the respective flow rate transducer 55 and 56 and a pressure regulating valve 59 and 60 that are positioned along the respective delivery line of the volumetric pump 39 and 40. The hydraulic components quoted are positioned along the supply lines 35 and 36, downstream of the volumetric pumps 39 and 40 and upstream of the mixing head 41. Subtraction lines 61 and 62 connect the flow rate subtracting valves 51 and 52 to the supply lines 35 and 36 of the volumetric pumps 39 and 40 or, as an alternative circuit, to the containers 31 and 32. In the apparatus 1 shown in the appended figures, the embodiment is shown in which the subtraction lines 61 and 62 are connected to the respective supply lines 35 and 36 of the volumetric pumps 39 and 40.

The flow rate subtracting valves 51 and 52 are arranged for branching off and diverting a part of the flow rate from the supply lines 35 and 36 to the supply to the volumetric pumps or to the containers 31 and 32, on the basis of a closed loop adjustment as disclosed further on in the description.

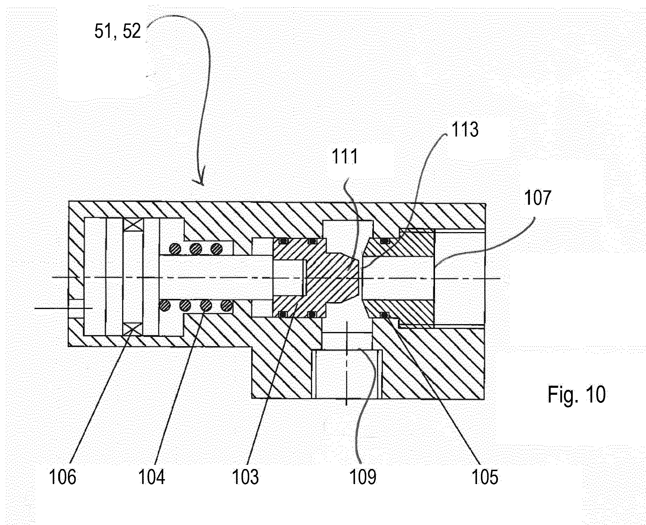

The flow rate subtracting valve 51 and 52 is of proportional type with a control that can be pneumatic or electric. In the embodiment of apparatus 1 shown in the appended figures, pneumatically controlled subtracting valves are shown. In particular, Fig.10 shows in detail the structure of the pneumatically controlled flow rate subtracting valves 51 and 52. Alternatively to the pneumatic control, it is possible to provide an electric control system that comprises a coil with a corresponding core connected to the valve case.

Hereinafter, reference is made to a flow rate subtracting valve 51 or 52 that, in a non-limiting manner, is a pneumatically controlled hydraulic proportional valve.

The structural and functional configuration of the subtracting valve 51 or 52 is disclosed below.

The subtracting valve 51, or 52 comprises a cursor 103 having a conical tip portion 111 configured to engage a flow rate partialization element 105 in which a hole or opening 113 is obtained that is bounded by a sharp-edged. The subtracting valve 51 or 52 comprises an entry hole or opening 107, connected to the supply lines 35 and 36, and a drain hole 109, connected to the subtraction lines 61 and 62.

The pneumatic pressure, exerted on a piston 106, maintains the cylindrical tip portion 111 against the sharp-edged zone that bounds the hole 113 of the partialization element 105, preventing the flow of the reacting components A and B within the subtracting valve 51 or 52. A spring 104 ensures opening - at a given pressure that is lower than the calibration pressure of the valve 60 - of the subtracting valve 51 or 52 in the event of lack of pneumatic pressure.

The operation of the subtracting valve 51 or 52 controls the value of pneumatic pressure applied to the piston 106. The pressure of the fluid upstream of the supply lines 35 and 36 tends to separate the conical tip portion 111 of the cursor 103 from the airtight and partialization edge by the partialization element 105. As the pressure on the inlet line 107 is adjusted by the respective valve 59, 60, the conical portion 111 retracts according to the value of the contrasting pneumatic pressure applied to the piston 106. Consequently, part of the reacting fluid can be drained from the supply lines 35 and 36 through the inlet hole 107, according to the pressure applied to the piston 106. Thus the reacting fluid can be channelled in a controlled manner to the subtraction lines 61 and 62, passing through the outlet hole 109. The drawing-off flow rate Q_{SPIL} channelled to the outlet hole 109 is measured by the flow rate transducers 55, 56 and regulated according to the necessary drawing-off reference value calculated by the control unit CU that regulates, decreasingly, the pneumatic pressure by a pneumatic proportional valve.

Like all pneumatic or electric proportional control valves, also the flow rate subtracting valves 51 and 52 are affected, like the efficiency of the dosing pumps, by the aforementioned disturbances caused by the pressure change between upstream and downstream of the same valves.

In fact, with the same control force, a greater flow rate leaks from the pneumatic or electric proportional control valves as the pressure differential increases. It is accordingly opportune for the hydraulic system to operate at a stabilised pressure differential.

The subtracting valve 51 or 52 has a proportional behaviour when the pressure of the reacting fluid upstream is stabilised.

Equally, the volumetric efficiency of the dosing pumps is stabilised and repeatable when the pressure of the reacting fluid upstream is stabilised.

In this regard, along the supply lines 35 and 36, pressure stabilization valves 59 and 60 are arranged to regulate the pressure differential delivered by the volumetric pumps 39 and 40, so as to stabilise the pressure head and, consequently, also the amount of leaking of the respective pumps and ensure correct and stable operation of the dosing devices 39 and 40 and, in particular, of the flow-rate subtracting valves 51 and 52.

The pressure stabilization valves 59 and 60 act by regulating the pressure of the pumps at a value that is greater than the pressure necessary for supplying the mixing head 41. In this manner, the disturbance effects related to pressure variations between suction and delivery and to leak variations are significantly mitigated.

The apparatus 1 also comprises a heat exchanger 37, located downstream of the volumetric pump 39, and arranged for setting the temperature of the resin A component before entry into the mixing head 41.

The temperature setting affects substantially only the resin A and not the hardener B that appears in very reduced percentages in the final mixture.

Upstream of the mixing head 41, three-way valves 65 and 66 are coupled to provide recirculation to maintain the components A and B in movement before and after each delivery.

The supply lines 35 and 36 convey the resin A and the hardener B to the mixing head 41. The two components A and B are mixed inside the static mixer 45. At the lower end of the static mixer 45, a distribution assembly 67 or distribution module 67 is provided into which the reacting mixture flows.

With reference to Fig. 4, downstream of the static mixer 45 and upstream of the distribution assembly 67, a pressure transducer 68 is present for controlling and regulating the flow rate of the reacting mixture delivered by the volumetric pumps 39 and 40.

The distribution assembly 67 is configured with a plurality of distribution channels respectively connected to one or more infusion lines LA, L_{B}, L_{C}, ..., L_{N} through which the reacting mixture is supplied to the openings 9 of the infusion chamber 8.

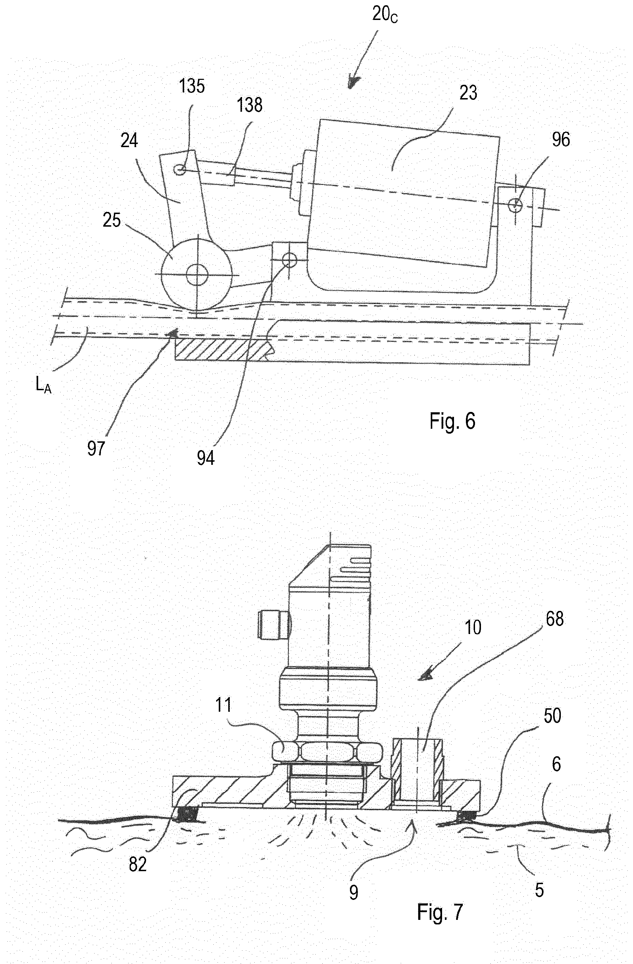

As visible in Fig. 6, each infusion line is defined by a flexible tubular conduit L_{A}, L_{B}, L_{C}, ..., Lrr along which a respective pneumatically or electrically controlled adjustable throttling unit 20_{A}, 20_{B}, 20_{C}, ..., 20_{N}; 21_{A}, 21_{B}, 21_{C},..., 21_{N} of peristaltic type is provided, arranged for varying the loss of localised pressure and controlling the flow of mixture into the corresponding flexible duct, in function of the pressure that is established below the barrier film 6 at the infusion points as disclosed in greater detail below.

The outlet end of each flexible tubular duct L_{A}, L_{B}, L_{C}, ..., L_{N} is connected to a respective opening 9 obtained on the barrier film 6 by a corresponding nipple inlet element 10, better shown in Figure 7.

The nipple element 10 comprises a pressure sensor 11 for monitoring the pressure present immediately below the barrier film 6. The pressure sensor 11 can measure the absolute pressure or differential with respect to the outer pressure.

In particular, the pressure sensor 11 can comprise a settable pressure switch that intervenes at a set activation threshold, for example at 100 millibars below the external pressure acting on the barrier film (900 absolute millibars if there is atmospheric pressure externally), or a vacuum meter that monitors continuously the absolute pressure below the barrier film 6 at the nipple-shaped inlet element 10.

The inlet element 10 can be for example pestle-shaped, comprises a connection 78 for the respective flexible tubular duct L_{A}, L_{B}, L_{C}, ..., L_{N} and a disc-shaped base body 82 suitable for being applied to the barrier film 6. The base body 82 is positioned at an opening 9 for the entry of the resin obtained on the barrier film 6 and is sealed perimetrally by the double-sided adhesive tape 50 or putty to establish an airtight connection. The inlet element 10 can also have different shapes, for example a cylindrical shape to be applied to the sides of the barrier film 6.

Upstream of the inlet element 10 along the pipe L_{N}, a flow rate meter or transducer 18_{A}, 18_{B}, 18c, ..., 18_{N} can be applied of the type that is not in direct contact with the fluid, thus configured to be able to be applied in a non-invasive manner (for example an ultrasound flow rate meter) that enables the flow rate to be detected and monitored that passes through one or more of the supply lines L_{N} of one or more inlet points 9. This measurement is used by the control unit CU to be displayed and to control the efficiency of the throttling action exerted by the controlled throttling valves 20 and to regulate, if required by programming of the infusion process, the flow rate along said line to offset appropriately the distribution of the reacting resin within the product.

In Figures 5, 8, 9, the feedback lines W_{A}, W_{B}, W_{C}, ..., W_{N} are shown schematically that connect the flow rate transducers 18_{A}, 18_{B}, 18c, ..., 18_{N} to a control node 83 included in the control unit CU and which enable to adjust the throttling action of the single throttling units 20_{A}, 20_{B}, 20_{C}, ..., 20_{N}; 21_{A}, 21_{B}, 21_{C}, ..., 21_{N} adjustable to obtain the required resin distribution.

Upstream of each inlet element 10, a cut-off device 86 through manual throttling of the flexible pipe is provided which is drivable by an operator if it is desired to intervene manually to close or throttle the flow of mixture, thus bypassing the corresponding adjustable throttling unit 20_{A}, 20_{B}, 20_{C}, ..., 20_{N}; 21_{A}, 21_{B}, 21_{C}, ..., 21_{N}.

The throttling units 20_{A}, 20_{B}, 20_{C}, ..., 20_{N}; 21_{A}, 21_{B}, 21_{C}, ..., 21_{N} provided with regulating units included in the apparatus 1 can be configured according to two possible embodiments.

In one embodiment, better visible in Fig. 5, an adjustable throttling unit 21_{A}, 21_{B}, 21_{C}, ...,21_{N} is provided of the type comprising a pneumatic cylinder or an electrical actuator 26 to the end of which a gripping or compression wedge element 27 is connected that is suitable for exerting from the exterior a pressure that compresses by throttling the corresponding flexible tubular duct that is indicated as L_{B} in figure 5.

The wedge element 27 can be coated with a material with a low friction coefficient, for example polytetrafluoroethylene, in order not to damage the tubular infusion duct.

In Fig. 5 only the throttling unit 21_{B} is visible, where letter "B" in combination with reference number "21" indicates by way of example that such throttling unit belongs to infusion line L_{B}.

In another embodiment, better shown in Fig. 6, in which by way of example only the throttling unit associated with the infusion line Lc is visible, the adjustable throttling unit 20c is of the type comprising a pneumatic cylinder 23 the rod 138 of which is connected, by a pin 135, to an "L"-shaped lever 24, which is rotatable around a pin 94. The body of the cylinder 23 is connected to a further hinge 96.

The oscillating lever 24 supports a presser wheel 25 suitable for compressing by throttling locally, as indicated by 97 in Figure 6, the respective flexible tubular duct L_{A} to regulate the localised pressure loss and regulating in this manner the flow of mixture. Embodiment 20_{A}, 20_{B}, 20_{C}, ..., 20_{N} of the adjustable throttling unit, owing to some of the specific features thereof, permits very wide and precise regulation, in particular owing to the lever system that can amplify the force of the pneumatic cylinder 23 by transforming the force into a greater force on the presser wheel 25; it further enables flexible pipes of different dimensions and stiffness to be inserted easily and rapidly below the wheel; it permits throttling without sliding friction and notching owing to the freedom of rotation and round shape of the wheel 25, which can also be shaped and grooved.

Both embodiments of adjustable throttling unit 20_{A}, 20_{B}, 20c, ..., 20_{N}; 21_{A}, 21_{B}, 21c, ..., 21_{N} have in common the advantage of not being, during operation, ever in contact with the mixture because they act outside the tubular infusion ducts. This translates into absence of contamination by the reacting resin, absence of emissions and long operating life of such adjustable throttling units 20_{A}, 20_{B}, 20_{C}, ..., 20_{N}; 21_{A}, 21_{B}, 21_{C}, ..., 21_{N} and into a significant reduction of the general cleaning and maintenance of the apparatus 1.

The apparatus 1 comprises a vacuum source 15 connectable to the infusion cavity 8 through one or more suction lines VL to generate therewithin an internal pressure P_{INT} that is lower than the external pressure P_{EST}, the value of which is detected by an appropriate pressure sensor. This enables the barrier film 6 to be kept adherent to the fibrous reinforcement support 5 and the flow of reacting mixture within the infusion cavity 8 to be promoted by the pressure drop. Along each suction line VL, upstream of the vacuum source 15 with respect to the advancement direction, a presence sensor 121 can be located, or, to detect possible resin rising during air suction. Owing to the signal supplied by such presence sensors 121, it is possible to close, by a shut-off valve 63, the respective infusion ducts as soon as the front of the resin starts to flow into the corresponding air suction ducts.

The vacuum condition ensures the diffusion of the reacting mixture from the inlet points 10 to the edges of the mould 4 and promotes correct impregnation of the fibres 5 by the mixture. Further, the vacuum condition acts to remove, in addition to the air entrapped in the meshes of the fibres 5, also the gases released by the mixture, and assists the infiltration of the reacting mixture to promote the elimination of vacuums and porosities with a positive effect on the structural quality and performance of the obtained structure made of composite material.

The operation of the apparatus 1 and the associated infusion method according to the present invention are disclosed below.

Once prepared and positioned, in the mould 4 which can be heated, the fibrous reinforcement bed or support 5, after the barrier film 6 is sealed and the connections of all the tubular infusion ducts L_{A}, L_{B}, L_{C}, ..., L_{N}, and of the suction pipe/s VL have been finalised, the vacuum source 15 is activated so as to create within the gap or infusion cavity 8 the desired vacuum condition, i.e. an absolute pressure equal to or near 0 absolute bars.

The establishment of the vacuum condition can reach and have effect from the flexible ducts L_{A}, L_{B}, L_{C}, ..., L_{N}, and from the mixing head 41 and the valves 65 and 66 for recirculation as far as the pressure-stabilising valves 59, 60.

The infusion process involves dosing in a stoichiometric ratio, by the pumps 39 and 40, the resin A and the hardener B and mixing the resin A and the hardener B using the mixing head 41 and the relative static mixer 45 to form the reacting mixture.

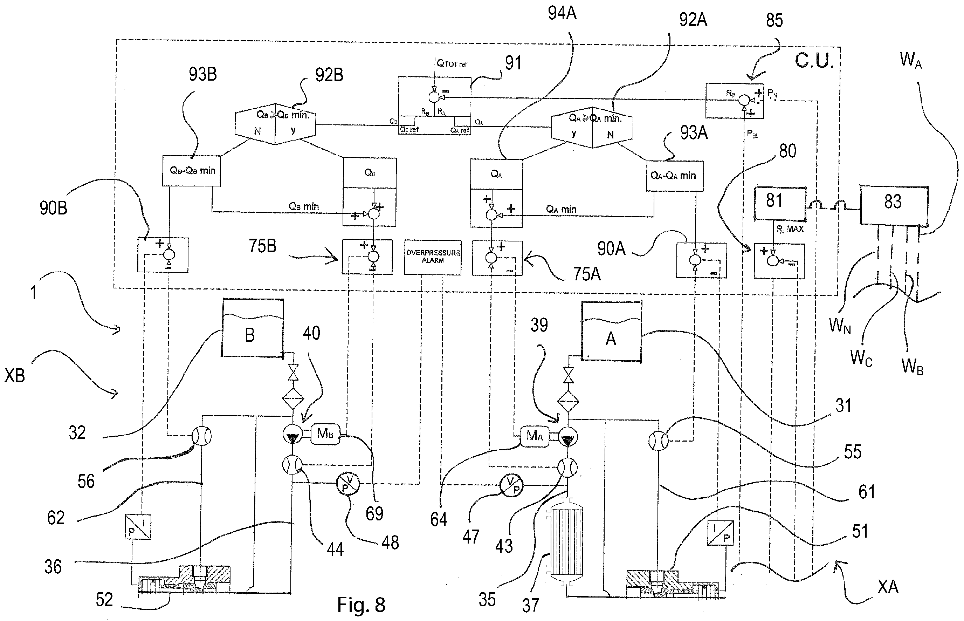

The control unit CU (such as for example a PLC) comprises modules 75, 80, 83, 90, 91, or closed loop feedback control functions supported by reference modules 81, 92, 93, 94 as represented in Fig. 8.

The control unit CU regulates the entire infusion process, controlling the total flow rate Q_{NOM} of the reacting mixture that is sent and delivered by the mixing head 41 during the entire infusion process.

The closed-loop control modules 75, 80, 83, 90, 91, as can be seen from the following description, define as many closed-loop feedback control levels.

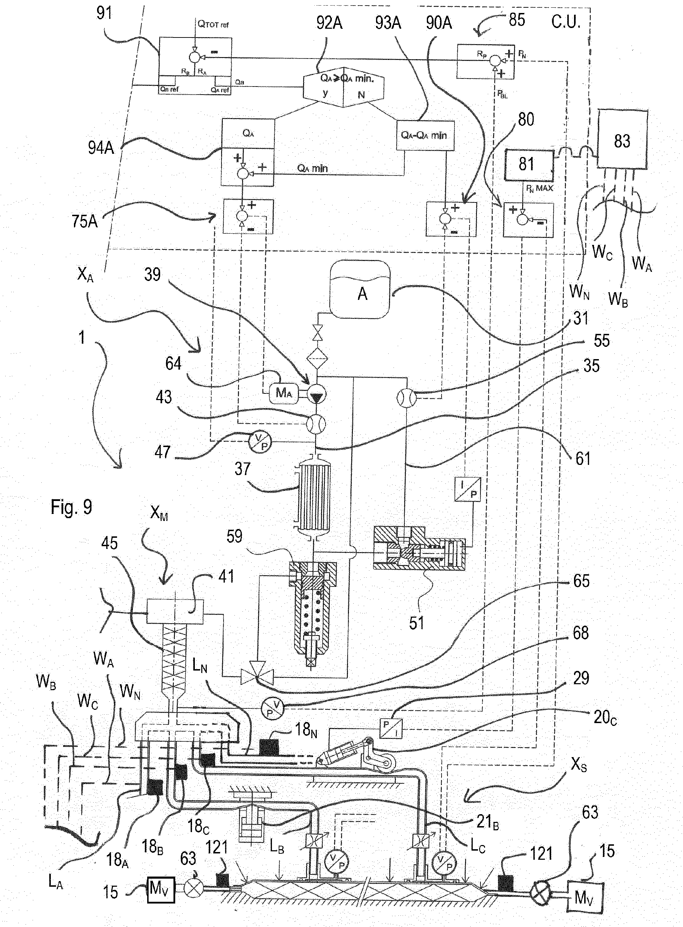

According to a first control level, the total flow rate Q_{NOM} of the reacting resin - consisting of the sum of the flow rates delivered by each pump at the start of the infusion process - is controlled by the module 91 for generating references of the delivered flow-rate values, both for the reacting resin Q_{A,REF}, and for the hardener Q_{B,REF}. The module 91 is in particular a setting function of the values of the reference flow rates (as shown in Figures 8 and 9) that also closes the regulating loop that lowers said values of the reference flow rates in feedback to the pressure exceeding thresholds detected by the transducers 68 and 11 that are suitably added up with weights in a node 85.

In the node 85, the set pressure exceeding values that are detected by the transducers 68 and 11 for the absolute pressure at the nth inlet opening 9 and at the point of delivery from the mixing head 41 are appropriately added together, values that control a decrease in the total flow rate delivered, in particular giving the detection of the sensors 11 a specific *feed forward* gain and anticipation of the expected intervention on the throttling devices 20 so as to anticipate a repercussion of the regulation of the flow rate on a line L_{N} on the other lines.

The module 91, when processing the aforesaid reference flow rates, takes account of the programming performed during setting of the delivery cycle, which comprises selecting the inlet points, the corresponding inlet sequences and the total flow rates to be generated and verifies and monitors these flow rates by the non-invasive flow rate transducers 18_{A}, 18_{B}, 18_{C}, ...,18_{N} when applied to the respective lines. The flow rate delivered by each pump is controlled by the first closed-loop control module 75 based on the "feedforward" logic reference, not shown in the diagram, that controls in advance the rotation speed of the pumps and then corrects it for the flow rate error detected by the corresponding transducer. Said references are divided into two distinct closed-loop control branches 75A and 75B, respectively for the reacting resin A and for the hardener B.

The reference module 92 performs a logic function that discriminates when to enable the flow rate subtraction system if delivery is requested of a flow rate below the minimum flow rate permitted by each of the pumps.

Each closed-loop control branch 75A and 75B regulates the individual flow rate of reacting resin Q_{A} and the single flow rate of hardener Q_{B} to be delivered, by the command and control of the speed of the respective volumetric pump 39 and 40, so as to provide the total flow rate Q_{NOM} set by the control unit CU, at the same time maintaining the stoichiometric ratio of the two components A and B. The flow rates are regulated in a closed loop, comparing the flow rates with the detected values of the operating flow rates Q_{A,OP} and Q_{B,OP} detected by the aforesaid flow rate transducers 43 and 44, to perform a regulation in feedback for each volumetric pump 39 and 40.

For example, if Q_{A,OP} < Q_{A,REF} and/or Q_{B,OP} < Q_{B,REF}, the control unit CU accelerates the rotation speed of the motors of the volumetric pumps 39 and 40 to increase the quantity of component delivered. On the other hand, if Q_{A,OP} > Q_{A,REF} and/or Q_{B,OP} > Q_{B,REF}, the control unit CU slows the rotation speed of the motors of the volumetric pumps 39 and 40 to decrease the quantity of component delivered. The dosing and delivery of the components are accelerated or decreased around suitable reference values Q_{A,REF} and Q_{B,REF}.

The two components A and B flow into the respective supply lines 35 and 36, meeting in the mixing head 41 and mixing within the subsequent static mixer 45. The thus formed reacting mixture passes into the distribution assembly 67 and is distributed along the various infusion lines L_{A}, L_{B}, L_{C}, ..., L_{N}.

The nominal flow rate Q_{NOM} of reacting mixture is divided into the various infusion lines L_{A}, L_{B}, L_{C}, ..., L_{N}, according to a previously programmed sequence, and delivered to the various inlet openings 9, selected on the basis of the set programme according to the set sequences. The distribution of the reacting mixture towards the infusion cavity 8 is promoted by the pressure drop generated by the vacuum pump 15 with respect to the resin pressure measured at the distribution assembly 67.

For the entire duration of the impregnation process, the control unit CU, via the module 91 for generating references of values of delivered flow rate, according to the inputs arising from subsequent control levels, the flow rates of the components A and B to be delivered to the mixing head 41, maintaining the quantity of resin A and hardener B in the correct stoichiometric ratio and the necessary resulting flow rate.

According to a subsequent control level, the correct execution of the impregnation process is assured by the second closed-loop control module 80, that comprises N closed-loop control lines that are independent of one another, one for each infusion line L_{A}, L_{B}, Lc, ..., L_{N}. Each infusion line N is made operational when selected from the sequence of the general infusion programme. When a line N is not operational, it is completely closed owing to the total throttling action performed by the respective adjustable throttling unit 20_{A}, 20_{B}, 20_{C}, ..., 20_{N}; 21_{A}, 21_{B}, 21_{C}, ..., 21_{N}. When a line is used for the infusion of reacting mixture within the infusion cavity 8, the adjustable throttling unit 20_{A}, 20_{B}, 20c, ..., 20_{N}; 21_{A}, 21_{B}, 21_{C},..., 21_{N} can be completely open (i.e. does not exert any throttling action on the line) or is partially open to limit by a suitable quantity the flow rate that transits there, on the basis of the command given by the regulation node of the single flow rate Q_{N} programmed by the operator and feedback verified by the control unit CU, that uses the signal of the respective flow rate transducer 18_{A}, 18_{B}, 18c, ..., 18_{N}. In one possible operating mode, the operator can intervene to adjust the throttling action in function of the detected flow rate or can enable the system in feedback- with which the apparatus is equipped - that adapts the flow rate very slowly, performing partialization/throttling of the line by successive small steps, with a regulation delay of at least one second. On the other hand, the loop control, which regulates the throttling action according to exceeding the pressure threshold, continues to be operational without delays.

The action of regulating the throttling units 20_{A}, 20_{B}, 20_{C}, ..., 20_{N}; 21_{A}, 21_{B}, 21_{C}, ..., 21_{N}, to decrease the flow rate that is conveyed along the respective line L_{N} to the specific inlet opening 9, can be set by the operator in function of the flow rate read by the respective non-invasive flow rate transducer and displayed on the control panel of the system, or the operator can enable a control in feedback that stabilises the flow rate slowly by proceeding to choke/throttle the nth line in small successive steps with a regulation delay of at least one second according to the set reference flow rate; nevertheless, the throttling regulation command remains operative and prevails when the pre-set pressure threshold is reached and/or exceeded, which is defined as the activation threshold, which is detected near the nth specific inlet opening 9 relative to a specific supply nipple 10 of the reacting mixture, at the inlet point.

In this second control level 80 thus on the basis of the pressure value measured by the pressure sensor 11 below the inlet opening 9 of a specific nipple 10, the control unit CU controls in a variable manner, according to need, the adjustable throttling unit 20_{A}, 20_{B}, 20_{C}, ..., 20_{N}; 21_{A}, 21_{B}, 21_{C}, ..., 21_{N}, (for example of the peristaltic valve type) that acts to throttle the flow section of the respective flexible tubular duct L_{A}, L_{B}, L_{C}, ..., L_{N} that supplies the nipple 10, so as to reduce the inflow of mixture. Owing to this solution, it is avoided that the pressure below the inlet opening 9, determined by the diffusion of the resin through the reinforcing fibres, increases until it forms faults and/or swelling on the surface of the product.

The adjustable throttling units 20_{A}, 20_{B}, 20_{C}, ..., 20_{N}; 21_{A}, 21_{B}, 21_{C}, ..., 21_{N} are configured to exert pressure from the exterior, and thus squeeze the respective flexible tubular duct L_{A}, L_{B}, L_{C}, ..., L_{N} in an increasing manner via a gripping or squeezing element controlled by an electrical actuator with a stroke proportional to the reference signal, or pneumatic actuated by an electropneumatic valve 29 that converts an electrical reference signal into pneumatic pressure that is proportional thereto, and is controlled by a closed loop control system to throttle in an increasing manner as the absolute pressure detected in the corresponding connecting and inlet element 10 increases.

The proportional throttling action succeeds in completely throttling the inlet when a settable threshold value P_{Nmax} is reached corresponding to the difference ΔP_{Nmax} between the external pressure P_{EST} that acts on the barrier film 6 and the maximum admissible pressure below the connecting and inlet element 10 detected by the corresponding pressure sensor 11.

The proportional throttling action can continue until it completely throttles the flexible pipe, preventing the inflow of reacting mixture to the inlet opening 9 in case the specific inlet line N is disabled, according to the programmed infusion sequence. The adjustable throttling unit 20_{A}, 20_{B}, 20_{C}, ..., 20_{N}; 21_{A}, 21_{B}, 21_{C}, ..., 21_{N} acts so as to oppose the flowing reacting mixture locally with an additional localised increase of controlled hydraulic resistance and so as to prevent the absolute pressure of the reacting resin below the connecting and inlet element 10 from exceeding the external pressure, with the resulting formation of localised build-up of reacting mixture and lifting of the barrier film 6.

The adjustable throttling units 20_{A}, 20_{B}, 20_{C}, ..., 20_{N}; 21_{A}, 21_{B}, 21_{C}, ..., 21_{N} positioned along each infusion line L_{A}, L_{B}, L_{C}, ..., L_{N} are operationally connected to the control unit CU to be driven independently of one another.

Each adjustable throttling unit 20_{A}, 20_{B}, 20_{C}, ..., 20_{N}; 21_{A}, 21_{B}, 21_{C}, ..., 21_{N} is driven selectively to reduce in a controlled manner the flow of mixture on the basis of signals of the corresponding pressure sensor 11, when the pressure at the corresponding inlet element 10 increases and approaches a preset pressure limit value.

This is used not only to prevent a local detachment of the barrier film 6 from the bed of fibres 5 with abnormal build-up of mixture thereunder, but also to ensure that the supply of flexible tubular ducts L_{A}, L_{B}, L_{C}, ..., L_{N} can be operated with pressure head above the atmospheric pressure.

In particular, the adjustable throttling units 20_{A}, 20_{B}, 20c, ..., 20_{N}; 21_{A}, 21_{B}, 21c, ..., 21_{N} are controlled independently of one another by a control system with a proportional control valve 29 that converts an electrical reference signal into pneumatic pressure. This electric signal arises from the difference between a programmed maximum pressure value for the specific inlet element 10 and the pressure detected there by the corresponding pressure sensor 11.

The respective tubular duct L_{A}, L_{B}, L_{C}, ..., L_{N} will be more throttled the more the pressure detected at the corresponding inlet element 10 approaches a desired maximum threshold pressure set at a value below the external pressure that acts on the barrier film. This threshold can also be set as difference value between the external absolute pressure and the absolute pressure within the impregnation cavity at the connecting and inlet element 10. Indicatively, the maximum pressure threshold indicated above can be set at a value about 100 millibars below the pressure that acts on the barrier film 6. Nevertheless, it can be decided to set the maximum absolute pressure threshold also at a much lower absolute pressure value, for example up to a difference in absolute pressure of 500 millibars from the external pressure.

In one possible pressure control method, each pressure sensor 11 can operate by detecting both the pressure that acts outside the infusion cavity 8, and the pressure inside the latter, so as to have the pressure differential between the interior and the exterior and consequently adjust the appropriate throttling to be applied to the respective infusion duct L_{A}, L_{B}, L_{C}, ..., Lrr. In fact, it is useful to set as reference for the adjusting system the maximum pressure threshold not to be exceeded, and exploit only the internal pressure signal to set accordingly the throttling action that is more pronounced the more this internal pressure approaches the set admissible maximum value.

According to the schematic representations of Figures 8-9, in fact, each pressure sensor 11 operates in the ambit of a control system set in feedback, based on the difference between the external pressure and the internal pressure with respect to the infusion cavity 8: if the pressure difference between the exterior and interior is high, the control unit CU inhibits the action of the throttling actuator; if on the other hand this pressure differential falls, the control unit CU increases the throttling action of the actuator. The throttling action of the actuator is more accentuated the less the pressure difference between interior and exterior.

Owing to the monitoring of the pressure at the infusion points, i.e. below each inlet element 10, and to the action of adding a controlled pressure jump (throttling) performed by the adjustable throttling units 20_{A}, 20_{B}, 20c, ..., 20_{N}; 21_{A}, 21_{B}, 21c, ..., 21_{N}, it is ensured that the impregnation operation proceeds correctly without undesired local build-ups and phenomena of detachment of the barrier film 6 from the underlying fibres 5.

It is possible to set the control unit CU so as to close completely one part of the peristaltic valves according to one preset temporal sequence.

The closing and/or throttling effect that determines an increase in the pressure jump by one or more adjustable throttling units 20_{A}, 20_{B}, 20_{C}, ..., 20_{N}; 21_{A}, 21_{B}, 21_{C}, ..., 21_{N} causes an increase of the pressure of the fluid in other zones downstream of the pressure stabilization valves 59 and 60, in particular below other inlet openings 9, because at the same actual flow rate of reacting mixture that supplies the input openings 9 of the infusion cavity 8 the overall hydraulic resistance increases according to the complete closure of some pipes and according to the bottlenecks; there is therefore an increase in the pressure along the lines and also at the level of the outlet from the static mixer 45.

In order to prevent this pressure increase from affecting the inlet openings 9 of the reacting mixture within the infusion cavity 8 and being able to damage the product being manufactured, taking the pressure below the connecting element 10 to a higher value than the atmospheric pressure and to avoid an uncontrolled increase of the pressure at other points downstream of the mixing apparatus 45, a third closed-loop control module 91, based on a feedback logic node or module 85, is provided, that compares the pressure increases detected by the transducer 68 between the mixture 45 and the distribution assembly 67 and the pressure increases detected by the pressure sensors 11 owing to the driving of the adjustable throttling units 20_{A}, 20_{B}, 20_{C}, ..., 20_{N}; 21_{A}, 21_{B}, 21_{C}, ..., 21_{N}. In the first instance, when the pressure P_{Y} measured by the transducer 68 exceeds a set value P_{LIM}, the control unit CU regulates the infusion process by decreasing the inflow of the components A and B to the mixing head 41, in particular by reducing the flow rates delivered by the pumps 39 and 40 in a manner that is inversely proportional to the difference in pressure ΔP₃ = P_{LIM} - P_{Y}- Pₙ. In other words, the flow rates delivered by the pumps 39 and 40 will be more reduced the smaller the value of the difference in pressure ΔP₃ between the set limit value P_{LIM} and the pressure value P_{Y} measured by the transducer 68, i.e. the more the pressure value P_{Y} approaches the set limit value P_{LIM}.

In the second instance, the unit CU moreover computes also a further flow rate reduction proportional to the pressure increase P_{N} detected by the pressure transducer 11. This decrease is necessary to offset the pressure increase beyond a certain threshold at the inlet openings 9 and the corresponding increase of throttling of the flow actuated by the corresponding adjustable throttling units 20_{A}, 20_{B}, 20_{C}, ..., 20_{N}; 21_{A}, 21_{B}, 21_{C}, ..., 21_{N}.

The reduced flow rates are in any case kept synchronised and at a suitable stoichiometric ratio by the control unit CU.

As previously mentioned, the operation of the adjustable throttling units 20_{A}, 20_{B}, 20_{C}, ..., 20_{N}; 21_{A}, 21_{B}, 21_{C}, ..., 21_{N} on one or more flexible tubular ducts L_{A}, L_{B}, L_{C}, ..., L_{N} could influence in an undesired manner the inflow of the components into the other ducts. In fact, the pressure of fluid located at the inlet points, adjacent to a flexible tubular duct L_{A}, L_{B}, L_{C}, ..., Lrr at which the throttling action reduces the flow of the fluid, could increase noticeably because of the increase in the flow rate that is distributed over the other inlet points, giving rise to swelling on the surface of the end product.

In this regard, the control unit CU processes the pressure signals at each inlet opening 9 of the mould 4, in order to perform a controlled decrease of the flow rate delivered by the volumetric pumps 39 and 40 in advance of the reduction of the flow rate operated by the third control level based on the feedback logic module 85, in function of the complete exclusion of one or more inlet lines. This offsetting function, by a decrease of the set nominal flow rate, is performed with an advance or "*feedforward*" command.

The reduced flow rates delivered by the pumps 39 and 40 generate a reacting mixture in such a quantity as to complete the infusion process, avoiding excessive pressure increases within the infusion cavity 8 and in other parts of the apparatus 1.

In the end step of the infusion process, when the volume free for the spread of the reacting resin within the infusion cavity is reduced until it almost disappears, the reduction of the total flow rate that is necessary to complete the process is such as to require the volumetric pumps 39 and 40 to deliver a flow rate of resin A and/or hardener B that is less than the minimum flow-rate value deliverable in controllable manner Q_{MIN} that is typical of the dosing pumps. In this step, the fourth closed-loop control module 90 that activates a fourth control level and that comprises two distinct loop branches 90A and 90B, one for the reacting resin A and one for the hardener B, is activated by reference logic modules 92, 93, 94.

In other words, in the end step of the process, one or both pumps should work below the minimum rotation speed at which correct and efficient dosage is still guaranteed. In this regard, in case the pump 39 has to deliver a flow rate Q_{A} < Q_{MIN,A} and/or the pump 40 has to deliver a flow rate Q_{B} < Q_{MIN,B}, closed-loop control modules 90A and 90B are provided that are controlled by the control unit CU, whose object is to ensure that the dosing of the components A and B to the mixing head 41 is precise ed efficient, although a controllable flow rate delivery lower than that achievable by the pumps is required.

Through the module 94, the CU unit determines the minimum flow rate references for the dosing pumps and the logic module 93 determines the references for the flow rate to be subtracted through the subtraction loop to lower further beyond the minimum possible value the flow rate sent to the mixing head.

By means of the reference logic modules 92, 93, 94, the speed of the pumps 39 and/or 40 is independently reduced and fixed at the minimum acceptable value to ensure continuous delivery of the minimum flow rate value Q_{MIN} typical of the pump. The flow-rate subtracting valves 51 and 52 intervene to regulate a respective drawing-off flow rate Q_{SPIL} controlled in feedback by means of a corresponding flow rate transducer 55, 56 installed on each respective flow rate subtraction line 61 and 62. The drawn-off flow, with drawing-off flow rate Q_{SPIL}, is derived and subtracted from the flow of the minimum flow rate Q_{MIN} of one or both components A and B that flows in the supply lines 35 and 36 and is conveyed along the subtraction lines 61 and 62 owing to the aforesaid flow-rate subtracting valves 51 and 52. In this manner, the drawn-off flow having a drawing-off flow rate Q_{SPIL} is conveyed to the removal point of the pumps 39 and 40 or sent to the containers 31 and 32. The flow rate transducers 55 and 56 regulate a flow rate drawing off value Q_{SPIL} on the basis base of the flow rate Qx < Q_{MIN} to be delivered to the mixing head 41. The drawn-off flow rate Q_{SPIL} is given by the subtraction between the set and programmed minimum flow-rate value Q_{MIN} for each dosing pump and the flow-rate value Qx equal to the value necessary to complete the infusion process when the resin has almost saturated the volume available within the infusion cavity 8. In formulas: Q_{SPIL} = Q_{MIN} - Qx.

Owing to the fourth closed-loop control module 90, the volumetric pumps 39 and 40 deliver the fixed and minimum flow-rate value Q_{MIN}, avoiding dosing errors. The excess flow rate or drawing-off flow rate Q_{SPIL} is withdrawn from the supply lines 35 and 36, so as to ensure the necessary flow rate Q_{X} to the supply head 41. In this manner, it is possible to reach flow-rate values Qx to be delivered to the mixing head 41 that are near zero, also equal to 1/200 of the nominal flow rate delivered in the initial steps of the infusion process.

Lastly, when it is necessary to stop definitively the delivery of the components A and B, the fluid that is still present along the supply lines 35 and 36 is completely recirculated by driving the three-way valves 65 and 66, interrupting mechanically the inflow of each single component A and B to the mixing head 41 and deviating the flow to the containers 31 and 32.

Owing to the apparatus 1 and operation thereof, the aforesaid objects are achieved. The apparatus 1 as disclosed provides a solution that permits at the same time an increase in productivity and higher quality of the obtained product.

The apparatus 1, also owing to the closed-loop control modules 75,80, 83, 90, 91 in feedback and to the *feed forward* command for the decreasing of flow rate, makes possible an optimised consumption of resin and a lower waste owing to a controlled delivery of the reactive components, also ensuring a correct and effective distribution of the resin that is free of disturbances caused by pressure jumps and excessive load losses.

The apparatus 1 operates with an available pressure head up to 20 bars, so it does not have the difficulties and problems that are typical of the supply to the impregnation points that are typical of the traditional system with head of atmospheric pressure only.

The disturbance caused by the jump in piezometric pressure that normally occurs when the open-top distribution barrel or pail has to supply inlet points of the structure to be impregnated that are at different heights also becomes negligible. This effect is very important because the atmospheric pressure ensures a piezometric head of a little less than 10 metres and the structures to be impregnated can also have vertical extents of 5 -7 metres.

The apparatus 1 does not have containers or reservoirs inside which the reacting resin is stored before being distributed along the flexible tubular ducts L_{A}, L_{B}, L_{C}, ..., Lrr. This feature places a fundamental role in ensuring a proper operation of the apparatus, because the absence of surfaces of reservoirs or containers that can cause the reacting resin to stagnate avoids the formation of prematurely hardened resin. The latter could build up and then detach from the surfaces of the aforesaid containers or barrels, preventing or slowing the distribution of the reacting mixture to the mould 4 or remain attached to the surfaces of the containers when the infusion process has terminated. In that sense, it is no longer necessary to resort the adoption of components of the mixture characterized by long latency times, because the reacting mixture is always kept in movement before reaching the mould 4. The absence of containers and reservoirs is also a financial saving as there are no maintenance, replacement and cleaning expenses.

The apparatus 1 has supply and distribution lines that connect with a minimum volume the containers 31 and 32 in which the non-mixed components A and B and the mould 4 are present.

Owing to the direct circuit configuration, the apparatus 1 is completely isolated from the outside atmosphere. This feature brings a two-fold advantage. First of all, operation is guaranteed with an insignificant quantity of air entrapped in the supply and distribution lines, so it makes it possible to avoid air bubbles during infusion. In addition, it helps to improve working conditions and to make the environment healthier and safer in which they have to work, avoiding the diffusion in the environment of unpleasant or harmful vapours that are on the other hand generated by the free skin of the open-top containers of known systems.

As just disclosed, the apparatus 1 is significantly simplified with respect to the systems belonging to the prior art. The reduction in the number of components, in particular but not only of reservoirs and containers, has as direct consequence the reduction of costs that are necessary for replacing all those components whose operability is reduced for example by premature hardening of the resin and the wear due to the continuous flow of fluid.

The apparatus 1 represents a solution that ensures the production of composite material structures without defects, such as surface swelling or internal porosity.

In particular, owing to the control modules 75, 80, 83, 90, 91 that control the total flow rate delivered by the containers 30 and 31, it is ensured that during the entire infusion process the pressure at the inlet points never exceeds the atmospheric pressure value, avoiding the formation of swelling of reacting mixture that builds up below the cloth.

The set objects are thus achieved successfully.

## Claims

1. Method for producing a body made of fibre-reinforced composite material, by infusion of a reacting mixture, under vacuum conditions, within an infusion cavity (8) bounded and separated from the external environment by a barrier element (6) impermeable to air and inside which a fibrous reinforcement support (5) is housed for impregnation, comprising the steps of:
- driving in a controlled manner, according to a first control level (75), a device (39, 40, 41, 45) comprising dosing pumps (39, 40) and a mixing head (41, 45) for dosing reactive components (A, B),
- mixing and supplying said resulting reacting mixture to a distribution assembly (67) towards said infusion cavity (8), at a predetermined nominal flow rate that is split and distributed, according to a programmed sequence, among several inlet ducts (L_{A}, L_{B}, L_{C}, ..., L_{N}) extending to respective inlet points (9), distributed on said barrier element (6),
- distributing the reacting mixture to one or more inlet points (9) selected and enabled in parallel and/or in sequence according to a programmed delivery sequence based on the pre-set flow rate and total amount,
- detecting and monitoring the flow rate along one or more of said inlet ducts (L_{A}, L_{B}, L_{C}, ..., L_{N}) at the various inlet points (9),
- reducing in a controlled manner, according to a programmed sequence, the incoming flow rates by a controlled and mutually independent throttling of the inlet ducts (L_{A}, L_{B}, L_{C}, ..., L_{N}).
**characterized in that it further comprises the steps of:**
- detecting and monitoring the pressure in the various enabled inlet points (9) and, when a pre-set first pressure threshold is exceeded, activating a second control level (80) to reduce the incoming flow rates at each inlet point (9), by controlled and mutually independent throttling of said inlet ducts (L_{A}, L_{B}, L_{C}, ..., L_{N}) to reduce the pressure, i.e. the pressure increase, by reducing the reacting mixture inflow at the respective inlet point (9),
- diminishing, through activation of a third control level (85, 91), the total delivery of reacting mixture, upon exceeding a respective pre-set pressure threshold detected at at least one of the inlet points (9),
- detecting and monitoring the reacting mixture pressure in a distribution zone (67) upstream of which said inlet ducts (L_{A}, L_{B}, L_{C}, ..., L_{N}) branch off and, in case of exceeding of a further pre-set pressure threshold, activating said third control level (85, 91) that reduces the total flow rate delivered as a function of the increase in the absolute pressure detected and, upon exceeding said threshold, decreasing the individual flow rates of the reactive components (A, B) by maintaining them in the correct stoichiometric ratio, and
- in the final impregnation step, which requires a reduction in the total flow rate of resin delivered, below at least one of the operating limits of the respective dosing pump (39, 40), starting a fourth control level (90, 92) that reduces the operating rate of one or more of said pumps (39, 40) to a minimum and safe operating condition for good operation, and the flow rate requested and delivered for the final impregnation step is further reduced by activating a controlled drawing off step that draws off one or both the flows of reactive components (A, B) from the delivery line to the mixing head (41) to re-introduce it into a respective container (31, 32) or to send it to the inlet suction line of the respective pump (39, 40).

2. Method according to claim 1, wherein
- said fibrous reinforcement support (5) intended to be impregnated with said reacting mixture obtained by arranging one or more fibre layers on a contrasting surface (3) of a mould (4),
- said fibrous reinforcement support (5) is applied on said barrier element (6) that is impermeable to air and to the resins and one or more inlet opens (9) are obtained for the introduction of the reacting mixture into said infusion cavity (8),
- said infusion cavity (8) is connected to one or more vacuum sources (15) by one or more suction lines (VL) to generate within said infusion cavity (8) an internal pressure (P_{INT}) that is lower than an external pressure (P_{EST}) acting on said barrier element (6), so as to keep said adhering barrier element (6) and said fibrous reinforcement support (5) and promote the diffusion of the reacting mixture flow within said infusion cavity (8).

3. Method according to claim 1 or 2, wherein at each reacting mixture inlet opening (9) a respective reacting resin inlet element (10) is positioned provided with a pressure sensor (11), for detecting either absolute or differential pressure with respect to the external pressure, and it is provided to connect each reacting resin inlet element (11) with a respective inlet duct (L_{A}, L_{B}, L_{C}, ..., L_{N}) to said distribution assembly (67) that is supplied with reacting mixture in a controlled manner by said device (39,40,41) for dosing, mixing and delivering the mixture.

4. Method according to any one of the preceding claims, wherein said barrier element comprises a barrier film (6), impermeable to air and resins that is perimetrally connected in an airtight manner to said mould (4) by a sealing double-sided adhesive tape or a sealing putty element, so as to define said infusion cavity (8), on said barrier element (6) being provided said inlet openings (9) and said inlet elements (10) for the reacting mixture, in which the reacting mixture inflow is diminished and regulated according to the exceeding of an absolute pressure threshold inside corresponding connecting and inlet elements (10), compensating for the pressure losses along the ducts, so as to prevent a detachment of said barrier film (6) from said fibrous reinforcement support (5) and prevent an abnormal build-up of mixture under the barrier film (6).

5. Method according to any one of the preceding claims, wherein to one or more of said inlet ducts (L_{A}, L_{B}, L_{C}, ..., L_{N}) a respective non-invasive type flow rate transducer (18_{A}, 18_{B}, 18_{C}, ..., 18_{N}) is applied, such as an ultrasound transducer or equivalent, suitable for detecting the flow rate flowing into the same inlet duct (L_{A}, L_{B}, L_{C}, ..., L_{N}) and in which along one or more of said inlet ducts (L_{A}, L_{B}, L_{C}, ..., L_{N}) provided with flow rate transducers (18_{A}, 18_{B}, 18_{C}, ..., 18_{N}), the flow rate of said reacting mixture to said inlet openings (9) and said inlet elements (10) is diminished and regulated according to the flow-rate value set in the programmed operating sequence.

6. Method according to any one of the preceding claims, wherein said reacting mixture is obtained by dosing and mixing a resin component (A) and a reacting or hardening component (B) by means of volumetric pumps (39, 40), and mixing head (41), in which said control unit (CU) controls and maintains the stoichiometric ratio of the components as the amount to be delivered through the mixing head (41) varies according to the flow rates detected by the flow rate transducers (43, 44) located downstream of each pump (39, 40), and in which the partial flow rates of the reacting components and, as a result, the total flow rate (Q) to the mixing head (41) are regulated by said control unit (CU) configured with a first closed-loop control module (75), said first control module (75) acting on said volumetric pumps (39, 40) to maintain the individual flow rates (Q_{A}, Q_{B}) of the component (A) and of the component (B) around respective reference values (Q_{A,REF}, Q_{B,REF}) for the component (A) and for the component (B), said reference values (Q_{A,REF}, Q_{B,REF}) being pre-set in said control unit (CU).

7. Method according to any one of the preceding claims, wherein the second control module (80) acts so as to
- monitor and detect the pressure inside each connecting and inlet element (10) through the respective pressure sensors (11), and
- generate a controlled pressure drop along the supply line up to the inlet point (9) by throttling the inlet ducts (L_{A}, L_{B}, L_{C}, ..., L_{N}) in a controlled, mutually independent manner on the basis of the signals of the corresponding pressure sensors (11) to reduce the corresponding reacting mixture inflow according to a programmed flow-rate value and to an absolute pressure increase exceeding a set threshold within the corresponding connecting and inlet elements (10), to maintain a difference in pressure between the outside and the inside of said infusion cavity (8) at the inlet point such that the absolute pressure at said inlet points does not exceed, by a desired pressure differential value, a pre-set admissible maximum value that is lower than said external pressure (P_{EST}) acting on said barrier element (6).

8. Method according to any one of the preceding claims, wherein each infusion line (L_{A}, L_{B}, L_{C}, ..., L_{N}) comprises a flexible tubular duct and wherein for each infusion line (L_{A}, L_{B}, L_{C}, ..., L_{N}) a respective pneumatically or electrically controlled adjustable throttling unit (20_{A}, 20_{B}, 20_{C}, ..., 20_{N}; 21_{A}, 21_{B} , 21_{C}, ..., 21_{N}) is operated independently of each other, acting to externally squeeze the respective flexible tubular duct (L_{A}, L_{B}, L_{C}, ..., L_{N}) according to a set activating sequence, to a programmed flow-rate value and according to the exceeding of the set pressure threshold value detected by the corresponding pressure sensor (11), so as to oppose a controlled hydraulic resistance locally to the flowing reacting mixture and in which each infusion line (L_{A}, L_{B}, L_{C}, ..., L_{N}) comprises a flexible tubular duct and wherein for one or more infusion lines (L_{A}, L_{B}, L_{C}, ..., L_{N}), independently of one another, a respective pneumatically or electrically controlled adjustable throttling unit (20_{A}, 20_{B}, 20_{C}, ..., 20_{N}; 21_{A}, 21_{B} , 21_{C}, ..., 21_{N}), acting to externally squeeze the respective flexible tubular duct (L_{A}, L_{B}, L_{C}, ..., L_{N}) according to a set activating sequence, according to a command at successive increasing squeezing values to reduce the flowing flow rate according to the values detected through the corresponding non-invasive flow rate transducer (18_{A}, 18_{B}, 18_{C}, ..., 18_{N}) by the operator or according to a programmed flow-rate value and detected in feedback by said non-invasive flow rate transducer (18_{A}, 18_{B}, 18_{C}, ..., 18_{N}) according to the sequence for filling said cavity kept under vacuum, in which said adjustable throttling unit (20_{A}, 20_{B}, 20_{C}, ..., 20_{N}; 21_{A}, 21_{B}, 21_{C}, ..., 21_{N}) acts to reduce the passage section in the respective flexible tubular duct (L_{A}, L_{B}, L_{C}, ..., L_{N}) and is controlled in a proportional manner by either an electrical actuator or a valve (29) that converts an electrical reference signal into pneumatic pressure, and is controlled by means of an On/Off-type control system to throttle said flexible tubular duct (L_{A}, L_{B}, L_{C}, ..., L_{N}) up to closure, thereby completely limiting the reacting mixture inflow to the inlet point (9), in the event that said inlet point (9) is not enabled according to the programmed inlet sequence.

9. Method according to claim 8, wherein said adjustable throttling unit (20_{A}, 20_{B}, 20_{C}, ..., 20_{N}; 21_{A}, 21_{B} ,21_{C},...,21_{N}), acts to reduce the passage section in the respective flexible tubular duct (L_{A}, L_{B}, L_{C}, ..., L_{N}) and is controlled in a proportional manner by an electrical actuator or a valve (29) that increases proportionately to the difference between the pressure detected in the corresponding said connecting and inlet element (10), and a settable threshold value ΔP_{Nmax} corresponding to the difference between the pressure outside the barrier film and the maximum admissible pressure below said corresponding connecting and inlet element (10).

10. Method according to one or more of the preceding claims, wherein it is provided, through the control unit (CU) configured with said third closed loop module (85, 91), to reduce the partial flow rates of the reacting components and, as a result, the total flow rate (Q) to said mixing head (41) , in the event that the pressure measured downstream of said mixing head (41) exceeds a previously set pressure limit value (P_{LIM}), in which the pressure is measured downstream of said mixing head (41) by a pressure transducer (68).

11. Method according to one or more of the preceding claims, wherein it is provided, through the control unit (CU) configured with said third closed-loop control module (85, 91), to reduce the partial flow rates of the reacting components and, as a result, the total flow rate (Q) sent to said mixing head (41), in the event that the pressure measured at at least one of said inlet points (10) exceeds a previously set pressure limit value (P_{LIM}).

12. Method according to any one of the preceding claims, wherein pressure stabilising valves (59, 60) are arranged for regulating the pressure differential delivered of said pumps (39, 40) so as to stabilise the pressure head and ensure the proper operation of said dosing device (39, 40, 41) and, specifically, of said flow-rate subtracting valves (51, 52) and of said dosing pumps (39, 40) when operating below their respective operating limits.

13. Method according to any one of the preceding claims, wherein flow rate drawing-off or subtracting valves (51, 52) are arranged configured to further reduce the flow rate delivered to said mixing head (41), when it is required a flow-rate value that is lower than a minimum flow rate operating threshold (Q_{MIN}) of said dosing pumps (39, 40) and wherein, by the control unit (CU) configured with said fourth closed-loop control module (90), the minimum flow rate of each of the two reactive components (A, B) sent to said mixing head (41) is reduced independently, in case that the required flow rate turns out to be lower than said safe operating minimum flow rate (Q_{MIN}) of each dosing pump (39, 40), by activating a controlled drawing off of said minimum flow rate (Q_{MIN}) delivered by said dosing pumps (39, 40), and wherein the control unit (CU) configured with a closed-loop control module (75) commands the minimum flow rate for each dosing pump (39, 40) independently of one of the two reactive components (A, B), in case that the required flow rate turns out to be lower than said safe operating minimum flow rate (Q_{MIN}) of each dosing pump (39, 40).

14. Method according to one or more of the preceding claims, wherein, it is provided, in a node (85) of said control level (85, 91), to add together the pre-set pressure exceeding values that are detected by said pressure transducer (68) and pressure sensor (11) for the absolute pressure at each inlet opening (9) and at the delivery point from the mixing head (41), said values commanding a reduction of the total flow rate delivered, and it is provided to supply to the detection of said transducer and sensor a specific *feed forward* gain and anticipation of the expected intervention on the respective adjustable throttling units (20_{A}, 20_{B}, 20_{C}, ..., 20_{N}; 21_{A}, 21_{B}, 21_{C}, ..., 21_{N}) so as to apply a flow rate regulation effect in advance on an infusion line (L_{N}) over the other infusion lines.

15. Apparatus for producing a body made of composite fibre-reinforced material, by infusion of a reacting mixture, under vacuum conditions, comprising:
- a mould (4) having a contrasting surface (3) suitable for receiving one or more fibre layers defining a fibrous reinforcement support (5) intended for being impregnated with said reacting mixture,
- a barrier element (6) impermeable to air and resin suitable for pressing on said fibrous reinforcement support (5) and arranged for bounding an infusion cavity (8) separated from the external environment,
- a device (39, 40, 41, 45, 75) comprising pumps (39, 40), a mixing head (41, 45) for dosing reactive components (A, B), mixing and sending said resulting reacting mixture to a distribution assembly (67) towards said infusion cavity (8),
- a first feedback control module (75) for controlling - by acting on said volumetric pumps (39, 40) - the partial flow rates of said reactive components (A, B) and, as a result, the total flow rate (Q) sent to said mixing head (41,45),
- one or several inlet ducts (L_{A}, L_{B}, L_{C}, ..., L_{N}) among which the total flow rate of the reacting mixture to be conveyed is split according to a programmed sequence, up to respective inlet points (9) distributed on said barrier element (6),
- throttling means (20_{A}, 20_{B}, 20_{C}, ..., 20_{N}; 21_{A}, 21_{B}, 21_{C}, ..., 21_{N}) for closing or enabling by controlling the inflow of reacting mixture to said various inlet points (9) according to one programmed sequence,
- means (11) for monitoring the pressure in the various inlet points (9),
- non-invasive type flow rate transducer means (18_{A}, 18_{B}, 18_{C}, ..., 18_{N}) applied to one or several inlet ducts (L_{A}, L_{B}, L_{C}, ..., L_{N}) to detect the respective flowing resin flow rate,
**characterized in that it further comprises**
- a second (80) control module, in accordance with a second control level operating in feedback, to reduce the incoming flow rates at each inlet point (9)
- by throttling in a controlled and mutually independent manner one or more of said inlet ducts (L_{A}, L_{B}, L_{C}, ..., L_{N}) according to a set flow rate and when a pre-set pressure threshold is exceeded - and thus reducing the pressure, at the respective inlet point (9),
- further means (68) for monitoring the resin pressure in a distribution zone (67) upstream of which said inlet ducts (L_{A}, L_{B}, L_{C}, ..., L_{N}) branch off and,
- a third control module (85) controlled in feedback loop arranged for reducing - in case an additional pre-set pressure threshold at said distribution assembly (67) or at least at one of the inlet points (11) is exceeded- the total flow rate delivered proportionally to the increase of the absolute pressure detected, by diminishing the total flow rate through the individual flow rates of the reactive components (A, B) maintaining them in the correct stoichiometric ratio, and
- a fourth loop control module (90) arranged for reducing - in the final impregnation step which requires a reduction in the total flow rate of resin requested below at least one of the operating limits (Q_{MIN}) of the respective dosing pump (39, 40) - the operating rate of one or more of said pumps (39, 40) to a minimum and safe operating condition for efficiency and proper operation, and arranged for further decreasing the flow rate required for the final impregnation step by activating a controlled drawing off step, that draws off a flow of reacting resin (A, B) from one or both supply lines (35, 36) to convey the flow of the respective reactive components (A, B) towards a respective reservoir (31, 32) or to send it to the inlet suction line of the respective pump (39, 40).

16. Apparatus for direct infusion under vacuum conditions of a reacting mixture according to claim 15, comprising:
- one or more inlet openings (9) for the introduction of the reacting mixture into said infusion cavity (8),
- at least one vacuum source (15) connectable to said infusion cavity (8) via one or more suction lines (VL) to generate within said infusion cavity (8) an internal pressure (P_{INT}) that is lower than the external pressure (P_{EST}) acting on said barrier element (6), to promote the flow of reacting mixture within said infusion cavity (8),
- containers (31, 32) for containing the resin (A) and the hardener (B),
- said supply lines (35, 36) connected to said volumetric dosing pumps (39, 40) to convey resin (A) and hardener (B) from said containers (31, 32) to said mixing head (41),
- pressure stabilising valve means (59, 60) for said supply lines (35, 36), configured to keep the delivery pressure of said pumps (39, 40) controlled close to the setting value and, as a result, to maintain the efficiency of said pumps (39, 40) and the efficiency of flow rate subtracting valves (51, 52), independently of possible pressure disturbances along said supply lines (35, 36),
- valve means (51, 52), for drawing off in a controlled manner at least one flow rate part of said components (A) and/or (B) and removing the excess flow rate that flows along said supply lines (35, 36),
- a distribution assembly (67), suitable for receiving and distributing the reacting mixture,
- one or more infusion lines (L_{A}, L_{B}, L_{C}, ..., L_{N}) arranged for connecting said distribution assembly (67) to said infusion chamber (8) for the supply of said reacting mixture,
- one or more connecting and inlet elements (10) provided at an end of each infusion line (L_{A}, L_{B}, L_{C}, ..., L_{N}) and each positionable on a respective inlet opening (9) for the mixture,
- a respective non-invasive flow rate transducer (18_{A}, 18_{B}, 18_{C}, ..., 18_{N}) being applied to one or more of said infusion lines (L_{A}, L_{B}, L_{C}, ..., L_{N}),
- each of said one or more connecting and inlet elements (10) being provided with a pressure sensor (11) for detecting and monitoring the pressure present under the barrier film (6) at the connecting inlet element (10),
- wherein said throttling means comprises a plurality of throttling units (20_{A}, 20_{B}, 20_{C}, ..., 20_{N}; 21_{A}, 21_{B} ,21_{C},...,21_{N}) positioned along each infusion line (L_{A}, L_{B}, L_{C}, ..., L_{N}), and drivable independently of one another to reduce the section of said infusion line (L_{A}, L_{B}, L_{C}, ..., L_{N}) in an adjustable manner as far as the closure, in order to reduce in a controlled manner the passage of mixture according to the signals of the corresponding flow rate detectors and pressure sensors (11), to control the flow rate inflow and to avoid an abnormal build-up of mixture under said barrier element (6) when the absolute pressure in the corresponding connecting and inlet element (10) increases and approaches a pre-set maximum admissible value that is lower than said external pressure (P_{EST}) acting on said barrier element (6).

17. Apparatus according to claim 15 or 16, wherein said barrier element comprises a barrier film (6) impermeable to air and resin suitable for being perimetrally connected in an airtight manner to a perimetral area (7) of said mould (4) that bounds said contrasting surface (3), in which said one or more inlet openings (9) for the reacting mixture are obtained on said barrier film (6), and in which said adjustable throttling units (20_{A}, 20_{B}, 20_{C}, ..., 20_{N}; 21_{A}, 21_{B}, 21_{C}, ..., 21_{N}) are configured to throttle the flowing of reacting mixture, i.e., to reduce the flowing section towards the corresponding inlet point and increase the hydraulic resistance along the infusion lines (L_{A}, L_{B}, L_{C}, ..., L_{N}) at the respective inlet point (9) according to the signals of the corresponding pressure sensors (11), to prevent a detachment of said barrier film (6) from said fibrous reinforcement support (5) and prevent an abnormal build-up of mixture under barrier film (6) and of the corresponding flowmeters, when applied, to regulate the distribution of said reacting resin, and in which each infusion line (L_{A}, L_{B}, L_{C}, ..., L_{N}) comprises a flexible tubular duct and wherein said adjustable throttling units (20_{A}, 20_{B}, 20_{C}, ..., 20_{N}; 21_{A}, 21_{B}, 21_{C}, ..., 21_{N}) are of the pneumatically or electrically-controlled type, configured to externally squeeze the respective flexible tubular duct (L_{A}, L_{B}, L_{C}, ..., L_{N}) according to the flow-rate value and the exceeding of the absolute pressure threshold detected by the corresponding pressure sensor (11), so as to oppose locally a controlled hydraulic resistance to the flowing reacting mixture.

18. Apparatus according to any one of claims 15 to 17, wherein said adjustable throttling units (20_{A}, 20_{B}, 20_{C}, ..., 20_{N}; 21_{A}, 21_{B}, 21_{C}, ...,21_{N}) are controlled independently of one another by a control system with proportional control valve (29) that converts a reference electric signal, according to the detection of the corresponding flow rate (if present) and pressure detector (11), into pneumatic pressure or with a proportional electric actuator, so as to throttle the respective flexible tubular duct (L_{A}, L_{B}, L_{C}, ..., L_{N}) the more the pressure detected in the corresponding connecting and inlet element (10) exceeds a reference threshold and approaches a desired set maximum threshold P_{Nfilm} corresponding to the difference ΔP_{Nfilm} between the pressure outside the barrier film and the maximum admissible pressure below the connecting and inlet element, and in which each throttling unit comprises a pneumatic cylinder (23) connected to a hinged lever (24) provided with a wheel pressing element (25) suitable for exerting externally a thrusting pressure on the corresponding flexible tubular conduit (L_{A}, L_{B}, L_{C},..., L_{N}), each throttling unit comprising a pneumatic cylinder (26) to the end of which a wedge pressure element (27) is connected that is suitable for exerting externally a throttling pressure on the corresponding flexible tubular conduit (L_{A}, L_{B}, L_{C}, ..., L_{N}).

19. Apparatus according to any one of claims 15 to 18, wherein said dosing and mixing device (39, 40, 41, 45) comprises volumetric dosing pumps (39, 40) for dosing and supplying said resin (A) and said reacting or hardening component (B), controlled in a closed loop in flow-rate feedback by means of flowmeters (43, 44) located downstream of each pump and a control unit (CU) that controls and maintains the stoichiometric ratio of the components when the total amount to be delivered to the distribution assembly (67) through the mixing head (41) varies, and wherein said dosing and mixing device (39, 40, 41, 45) and said volumetric pumps (39, 40) are drivable in a controlled manner to regulate the correct delivery flow rate of mixing head (41) according to the amount of reacting mixture requested at the infusion cavity (8).

20. Apparatus according to any one of claims 15 to 19, wherein said valve means (51, 52) comprises flow-rate subtracting valves (51, 52), suitable for subtracting in feedback controlled manner by means of flow rate transducers (55, 56) part of the flow rate from said supply lines (35, 36) of the reactive components (A, B) and conveying it along subtraction lines (61, 62), and wherein said subtraction lines (61, 62) connect said flow rate subtracting valves (51, 52) alternatively to said containers (31, 32) of the reactive components (A, B) or to said pumps (39, 40) through flow rate transducers (55, 56).

21. Apparatus according to claim 20, wherein each flow rate subtracting valve (51, 52) comprises a hydraulic piston (106), connected to a cursor (103) provided with a conical tip (111) configured to engage the edge of a flow-rate partialization element (105), said cursor (103) being configured to press said cylindrical tip (111) against said partialization element (105) for effect of the hydraulic pressure exerted thereupon, so as to selectively prevent or reduce the passage of the reacting components (A, B) within the same subtracting valve (51 ,52), the contrasting pressure of said reacting components (A, B) being such as to separate said cylindrical tip (111) of the cursor (103) from said partialization element (105), enabling a controlled flow rate of said reacting components (A, B) to flow inside the body of said flow-rate subtracting valves (51, 52) and towards said subtraction lines (61, 62).

## Patentansprüche

1. Erzeugungsverfahren zur Herstellung eines Körpers aus faserverstärktem Verbundwerkstoff durch Infusion eines Reaktionsgemisches unter Vakuumbedingungen in einem Infusionshohlraum (8), der durch ein luftundurchlässiges Sperrelement (6) begrenzt und von der äußeren Umgebung getrennt ist und in dem ein Faserverstärkungsträger (5) zur Imprägnierung untergebracht ist, umfassend die folgenden Schritte:
- gesteuertes Ansteuern, gemäß einer ersten Steuerebene (75), einer Vorrichtung (39, 40, 41, 45), umfassend Dosierpumpen (39, 40) und einen Mischkopf (41, 45) zur Dosierung von reaktiven Komponenten (A, B),
- Mischen und Zuführen der resultierenden Reaktionsmischung zu einer Verteilereinheit (67) in Richtung des Infusionshohlraums (8) mit einer vorbestimmten nominalen Durchflussmenge, die aufgeteilt und gemäß einer programmierten Sequenz auf mehrere Einlasskanäle (L_{A}, L_{B}, L_{C}, ..., L_{N}) verteilt wird, die sich zu jeweiligen Einlasspunkten (9) erstrecken, die auf dem Sperrelement (6) verteilt sind,
- Verteilen des Reaktionsgemischs an einen oder mehrere Einlasspunkte (9), die parallel und/oder nacheinander gemäß einer programmierten Abgabesequenz auf der Grundlage der voreingestellten Durchflussmenge und Gesamtmenge ausgewählt und aktiviert werden,
- Erfassen und Überwachen der Durchflussmenge entlang eines oder mehrerer der Einlasskanäle (L_{A}, L_{B}, L_{C}, ..., L_{N}) an den verschiedenen Einlasspunkten (9),
- kontrollierte Verringerung der eintretenden Durchflussmengen nach einer programmierten Reihenfolge durch eine kontrollierte und voneinander unabhängige Drosselung der Einlasskanäle (L_{A}, L_{B}, L_{C}, ..., L_{N}).
**dadurch gekennzeichnet, dass es weiter die folgenden Schritte umfasst:**
- Erfassen und Überwachen des Drucks in den verschiedenen freigegebenen Einlasspunkten (9) und, wenn ein voreingestellter erster Druckschwellenwert überschritten wird, Aktivieren einer zweiten Steuerebene (80), um die eingehenden Durchflussmengen an jedem Einlasspunkt (9) durch kontrolliertes und voneinander unabhängiges Drosseln der Einlasskanäle (L_{A}, L_{B}, Lc, ..., L_{N}) zu reduzieren, um den Druck, d. h. den Druckanstieg, durch Reduzieren des Zuflusses des Reaktionsgemischs am jeweiligen Einlasspunkt (9) zu reduzieren,
- Verringern, durch Aktivierung einer dritten Steuerebene (85, 91), der Gesamtabgabe von Reaktionsgemisch bei Überschreiten eines jeweiligen voreingestellten Druckschwellenwertes, der an mindestens einem der Einlasspunkte (9) erfasst wird,
- Erfassen und Überwachen des Drucks des Reaktionsgemischs in einer Verteilungszone (67), stromaufwärts von der die Einlasskanäle (L_{A}, L_{B}, Lc, ..., L_{N}) abzweigen, und bei Überschreiten eines weiteren voreingestellten Druckschwellenwerts Aktivieren der dritten Steuerebene (85, 91), die die Gesamtdurchflussmenge in Abhängigkeit vom erfassten Anstieg des absoluten Drucks reduziert und bei Überschreiten des Schwellenwerts die einzelnen Durchflussmengen der reaktiven Komponenten (A, B) verringert, indem sie im richtigen stöchiometrischen Verhältnis gehalten werden, und
- im letzten Imprägnierschritt, der eine Verringerung der Gesamtdurchflussmenge des gelieferten Harzes unter mindestens eine der Betriebsgrenzen der jeweiligen Dosierpumpe (39, 40) erfordert, Starten einer vierten Steuerebene (90, 92), die die Betriebsrate einer oder mehrerer der Pumpen (39, 40) auf eine minimale und sichere Betriebsbedingung für einen guten Betrieb reduziert, und wobei die für den abschließenden Imprägnierschritt angeforderte und gelieferte Durchflussmenge weiter reduziert wird, indem ein gesteuerter Abzugsschritt aktiviert wird, der einen oder beide Ströme reaktiver Komponenten (A, B) von der Förderleitung zum Mischkopf (41) abzieht, um sie in einen entsprechenden Behälter (31, 32) wieder einzuführen oder sie zur Einlass-Saugleitung der entsprechenden Pumpe (39, 40) zu schicken.

2. Verfahren nach Anspruch 1, wobei
- der Faserverstärkungsträger (5) dazu bestimmt ist, mit der Reaktionsmischung imprägniert zu werden, die durch Anordnen einer oder mehrerer Faserschichten auf einer kontrastierenden Oberfläche (3) einer Form (4) erhalten wird,
- der Faserverstärkungsträger (5) auf dem Sperrelement (6) aufgebracht ist, das für Luft und die Harze undurchlässig ist, und eine oder mehrere Einlassöffnungen (9) für die Einführung der Reaktionsmischung in den Infusionshohlraum (8) erhalten werden,
- wobei der Infusionshohlraum (8) mit einer oder mehreren Vakuumquellen (15) durch eine oder mehrere Saugleitungen (VL) verbunden ist, um innerhalb des Infusionshohlraums (8) einen Innendruck (P_{INT}) zu erzeugen, der niedriger ist als ein Außendruck (P_{EST}), der auf das Sperrelement (6) wirkt, sodass das anhaftende Sperrelement (6) und der Faserverstärkungsträger (5) gehalten werden und die Diffusion des Reaktionsgemischflusses innerhalb des Infusionshohlraums (8) gefördert wird.

3. Verfahren nach Anspruch 1 oder 2, wobei an jeder Einlassöffnung (9) für die Reaktionsmischung ein entsprechendes Einlasselement (10) für das Reaktionsharz angeordnet ist, das mit einem Drucksensor (11) versehen ist, um entweder den absoluten Druck oder den Differenzdruck in Bezug auf den Außendruck zu erfassen, und wobei vorgesehen ist, jedes Einlasselement (11) für das Reaktionsharz mit einem entsprechenden Einlasskanal (L_{A}, L_{B}, L_{C}, ..., L_{N}) mit der Verteilereinheit (67) zu verbinden, die von der Vorrichtung (39, 40, 41) zum Dosieren, Mischen und Liefern der Mischung auf kontrollierte Weise mit Reaktionsmischung versorgt wird.

4. Verfahren nach einem der vorstehenden Ansprüche, wobei das Sperrelement eine luft- und harzundurchlässige Sperrfolie (6) umfasst, die durch ein doppelseitiges Klebeband oder ein Dichtungskittelement perimetrisch luftdicht mit der Form (4) verbunden ist, sodass der Infusionshohlraum (8) definiert wird, wobei an dem Sperrelement (6) die Einlassöffnungen (9) und die Einlasselemente (10) für das Reaktionsgemisch vorgesehen sind, in dem der Zufluss des Reaktionsgemischs in Abhängigkeit von der Überschreitung eines absoluten Druckschwellenwerts im Inneren der entsprechenden Verbindungs- und Einlasselemente (10) verringert und reguliert wird, wobei die Druckverluste entlang der Leitungen kompensiert werden, sodass eine Ablösung der Sperrfolie (6) von dem Faserverstärkungsträger (5) und eine anormale Ansammlung von Gemisch unter der Sperrfolie (6) verhindert wird.

5. Verfahren nach einem der vorstehenden Ansprüche, wobei an einem oder mehreren der Einlasskanäle (LA, L_{B}, L_{C}, ..., L_{N}) ein jeweiliger nicht-invasiver Durchflusswandler (18_{A}, 18_{B}, 18_{C}, ..., 18_{N}), wie beispielsweise ein Ultraschallwandler oder ein gleichwertiger Wandler, angebracht ist, der geeignet ist, die in denselben Einlasskanal (L_{A}, L_{B}, L_{C}, ..., L_{N}) fließende Durchflussmenge zu erfassen, und wobei entlang eines oder mehrerer der mit Durchflusswandlern (18_{A}, 18_{B}, 18_{C}, ..., 18_{N}) versehenen Einlasskanäle (L_{A}, L_{B}, L_{C}, ..., L_{N}) die Durchflussmenge des Reaktionsgemischs zu den Einlassöffnungen (9) und den Einlasselementen (10) verringert und entsprechend dem in der programmierten Betriebssequenz eingestellten Durchflussmengenwert geregelt wird.

6. Verfahren nach einem der vorstehenden Ansprüche, wobei das Reaktionsgemisch durch Dosieren und Mischen einer Harzkomponente (A) und einer Reaktions- oder Härtungskomponente (B) mittels volumetrischer Pumpen (39, 40) und eines Mischkopfes (41) erhalten wird, wobei die Steuereinheit (CU) das stöchiometrische Verhältnis der Komponenten steuert und aufrechterhält, während die durch den Mischkopf (41) zu fördernde Menge entsprechend den von den stromabwärts von jeder Pumpe (39, 40) angeordneten Durchflusswandlern (43, 44) erfassten Durchflussmengen variiert, und bei dem die Teildurchflüsse der reagierenden Komponenten und infolgedessen der Gesamtdurchfluss (Q) zum Mischkopf (41) durch die Steuereinheit (CU) geregelt werden, die mit einem ersten Regelmodul (75) ausgestattet ist, wobei das erste Steuermodul (75) auf die volumetrischen Pumpen (39, 40) einwirkt, um die individuellen Durchflussmengen (Q_{A}, Q_{B}) der Komponente (A) und der Komponente (B) um jeweilige Referenzwerte (Q_{A,REF}, Q_{B,REF}) für die Komponente (A) und für die Komponente (B) herum zu halten, wobei die Referenzwerte (Q_{A,REF}, Q_{B,REF}) in der Steuereinheit (CU) voreingestellt sind.

7. Verfahren nach einem der vorstehenden Ansprüche, wobei das zweite Steuermodul (80) so arbeitet, dass es
- den Druck im Inneren jedes Anschluss- und Einlasselements (10) über die jeweiligen Drucksensoren (11) überwacht und erfasst, und
- einen kontrollierten Druckabfall entlang der Zuführleitung bis zum Einlasspunkt (9) erzeugt, indem es die Einlasskanäle (L_{A}, L_{B}, L_{C}, ..., L_{N}) in einer kontrollierten, voneinander unabhängigen Weise auf der Grundlage der Signale der entsprechenden Drucksensoren (11) drosselt, um den entsprechenden Zufluss der Reaktionsmischung gemäß einem programmierten Durchflusswert und einem absoluten Druckanstieg, der einen eingestellten Schwellenwert überschreitet, innerhalb der entsprechenden Verbindungs- und Einlasselemente (10) zu reduzieren, um eine Druckdifferenz zwischen der Außenseite und der Innenseite des Infusionshohlraums (8) am Einlasspunkt aufrechtzuerhalten, sodass der absolute Druck an den Einlasspunkten einen voreingestellten zulässigen Maximalwert, der niedriger ist als der auf das Sperrelement (6) wirkende Außendruck (PEST), nicht um einen gewünschten Druckdifferenzwert überschreitet.

8. Verfahren nach einem der vorstehenden Ansprüche, wobei jede Infusionsleitung (L_{A}, L_{B}, L_{C}, ..., L_{N}) eine flexible Rohrleitung umfasst und wobei für jede Infusionsleitung (L_{A}, L_{B}, L_{C}, ..., L_{N}) eine jeweilige pneumatisch oder elektrisch gesteuerte, einstellbare Drosseleinheit (20_{A}, 20_{B}, 20_{C}, ..., 20_{N}; 21_{A}, 21_{B} , 21_{C}, ..., 21_{N}) unabhängig voneinander betrieben wird, die dazu dient, die jeweilige flexible Rohrleitung (L_{A}, L_{B}, L_{C}, ..., L_{N}) gemäß einer eingestellten Aktivierungssequenz von außen auf einen programmierten Durchflusswert und gemäß dem Überschreiten des eingestellten Druckschwellenwerts, der von dem entsprechenden Drucksensor (11) erfasst wird, zu drücken, sodass dem fließenden Reaktionsgemisch lokal ein kontrollierter hydraulischer Widerstand entgegengesetzt wird, und bei dem jede Infusionsleitung (L_{A}, L_{B}, L_{C}, ..., L_{N}) eine flexible Rohrleitung umfasst, und wobei für eine oder mehrere Infusionsleitungen (L_{A}, L_{B}, L_{C}, ..., L_{N}), unabhängig voneinander, jeweils eine pneumatisch oder elektrisch gesteuerte, einstellbare Drosseleinheit (20 _{A}, 20_{B}, 20_{C}, ..., 20_{N}; 21_{A}, 21_{B},21_{C}, ..., 21_{N}) wirkt, um die jeweilige flexible Rohrleitung (L_{A}, L_{B}, Lc, ..., L_{N}) gemäß einer festgelegten Aktivierungssequenz von außen, gemäß einem Befehl bei sukzessiv ansteigenden Druckwerten, zu drücken, um die fließende Durchflussmenge gemäß den Werten zu reduzieren, die durch den entsprechenden nicht-invasiven Durchflusswandler (18_{A}, 18_{B}, 18_{C}, ..., 18_{N}) durch den Bediener oder gemäß einem programmierten Durchflussmengenwert erfasst werden und in Rückmeldung durch den nicht-invasiven Durchflusswandler (18_{A}, 18_{B}, 18_{C}, ..., 18_{N}) erfasst werden, gemäß der Sequenz zum Füllen des unter Vakuum gehaltenen Hohlraums, in der die einstellbare Drosseleinheit (20_{A}, 20_{B}, 20_{C}, ..., 20_{N}; 21_{A}, 21_{B}, 21_{C}, ..., 21_{N}) wirkt, um den Durchgangsabschnitt in der jeweiligen flexiblen Rohrleitung (L_{A}, L_{B}, L_{C}, ..., L_{N}) zu verringern und proportional entweder durch ein elektrisches Stellglied oder ein Ventil (29) gesteuert wird, das ein elektrisches Sollsignal in einen pneumatischen Druck konvertiert, und mittels eines Steuersystems vom Typ Ein/Aus gesteuert wird, um die flexible Rohrleitung (L_{A}, L_{B}, L_{C}, ..., L_{N}) bis zum Schließen zu drosseln, wodurch der Zufluss des Reaktionsgemisches zum Einlasspunkt (9) vollständig begrenzt wird, falls der Einlasspunkt (9) nicht gemäß der programmierten Einlasssequenz freigegeben wird.

9. Verfahren nach Anspruch 8, wobei die einstellbare Drosseleinheit (20_{A}, 20_{B}, 20c, ..., 20_{N}; 21_{A}, 21_{B} ,21_{C},...,21_{N}) zur Verringerung des Durchlassquerschnitts in der jeweiligen flexiblen Rohrleitung (L_{A}, L_{B}, L_{C}, ..., L_{N}) wirkt und proportional durch einen elektrischen Aktuator oder ein Ventil (29) gesteuert wird, das proportional zur Differenz zwischen dem in dem entsprechenden Verbindungs- und Einlasselement (10) erfassten Druck und einem einstellbaren Schwellenwert ΔP_{Nmax}, der der Differenz zwischen dem Druck außerhalb des Sperrfilms und dem maximal zulässigen Druck unterhalb des entsprechenden Verbindungs- und Einlasselements (10) entspricht, zunimmt.

10. Verfahren nach einem oder mehreren der vorstehenden Ansprüche, wobei vorgesehen ist, durch die mit dem dritten Regelungsmodul (85, 91) konfigurierte Steuereinheit (CU) die Teil-Durchflussmengen der reagierenden Komponenten und damit die Gesamt-Durchflussmenge (Q) zum Mischkopf (41) zu reduzieren, wenn der stromabwärts des Mischkopfes (41) gemessene Druck einen zuvor eingestellten Druckgrenzwert (P_{LIM}) überschreitet, wobei der Druck stromabwärts des Mischkopfes (41) durch einen Druckwandler (68) gemessen wird.

11. Verfahren nach einem oder mehreren der vorstehenden Ansprüche, wobei vorgesehen ist, durch die mit dem dritten Regelmodul (85, 91) konfigurierte Steuereinheit (CU) die Teil-Durchflussmengen der reagierenden Komponenten und infolgedessen die Gesamt-Durchflussmenge (Q), die dem Mischkopf (41) zugeführt wird, zu reduzieren, falls der an mindestens einem der Einlasspunkte (10) gemessene Druck einen zuvor eingestellten Druckgrenzwert (P_{LIM}) überschreitet.

12. Verfahren nach einem der vorstehenden Ansprüche, wobei Druckstabilisierungsventile (59, 60) angeordnet sind, um die von den Pumpen (39, 40) gelieferte Druckdifferenz zu regulieren, sodass der Druckkopf stabilisiert und der ordnungsgemäße Betrieb der Dosiervorrichtung (39, 40, 41) und insbesondere der Durchflussmengenabzugsventile (51, 52) und der Dosierpumpen (39, 40) sichergestellt wird, wenn sie unterhalb ihrer jeweiligen Betriebsgrenzen betrieben werden.

13. Verfahren nach einem der vorstehenden Ansprüche, wobei Durchflussmengenabzugs- oder Subtraktionsventile (51, 52) angeordnet sind, die so konfiguriert sind, dass sie die an den Mischkopf (41) gelieferte Durchflussmenge weiter reduzieren, wenn ein Durchflussmengenwert erforderlich ist, der niedriger ist als ein Mindestdurchflussmengenbetriebsschwellenwert (Q_{MIN}) der Dosierpumpen (39, 40) und wobei durch die Steuereinheit (CU), die mit dem vierten Regelungsmodul (90) konfiguriert ist, die Mindestdurchflussmenge jeder der beiden reaktiven Komponenten (A, B), die an den Mischkopf (41) gesendet werden, unabhängig reduziert wird, falls sich herausstellt, dass die erforderliche Durchflussmenge niedriger ist als die sichere Mindestbetriebsdurchflussmenge (Q_{MIN}) jeder Dosierpumpe (39, 40), indem ein kontrollierter Abzug der Mindestdurchflussmenge (Q_{MIN}) aktiviert wird, die durch die Dosierpumpen (39, 40) geliefert wird, und wobei die Steuereinheit (CU), die mit einem Regelungsmodul (75) konfiguriert ist, die Mindestdurchflussmenge für jede Dosierpumpe (39, 40) unabhängig von einer der beiden reaktiven Komponenten (A, B) befiehlt, falls sich herausstellt, dass die erforderliche Durchflussmenge geringer ist als die sichere Betriebsmindestdurchflussmenge (Q_{MIN}) jeder Dosierpumpe (39, 40).

14. Verfahren nach einem oder mehreren der vorstehenden Ansprüche, wobei vorgesehen ist, in einem Knoten (85) der Steuerebene (85, 91) die voreingestellten Drucküberschreitungswerte zu addieren, die von dem Druckwandler (68) und dem Drucksensor (11) für den absoluten Druck an jeder Einlassöffnung (9) und am Abgabepunkt vom Mischkopf (41) erfasst werden, wobei diese Werte eine Verringerung der abgegebenen Gesamtdurchflussmenge befehlen, und es ist vorgesehen, der Erfassung des Wandlers und des Sensors eine spezifische Vorwärtsverstärkung und Vorwegnahme des erwarteten Eingriffs auf die jeweiligen einstellbaren Drosseleinheiten (20_{A}, 20_{B}, 20_{C}, ..., 20_{N}; 21_{A}, 21_{B}, 21_{C}, ..., 21_{N}) zuzuführen, sodass auf einer Infusionsleitung (L_{N}) gegenüber den anderen Infusionsleitungen eine Durchflussmengenregulierung im Voraus erfolgt.

15. Einrichtung zur Herstellung eines Körpers aus faserverstärktem Verbundmaterial durch Infusion eines Reaktionsgemisches unter Vakuumbedingungen, umfassend:
- eine Form (4) mit einer kontrastierenden Oberfläche (3), die geeignet ist, eine oder mehrere Faserschichten aufzunehmen, die einen Faserverstärkungsträger (5) definieren, der dazu bestimmt ist, mit der Reaktionsmischung imprägniert zu werden,
- ein Sperrelement (6), das luft- und harzundurchlässig ist und auf den Faserverstärkungsträger (5) gepresst werden kann und so angeordnet ist, dass es einen von der äußeren Umgebung getrennten Infusionshohlraum (8) begrenzt,
- eine Vorrichtung (39, 40, 41, 45, 75), umfassend Pumpen (39, 40), einen Mischkopf (41, 45) zur Dosierung reaktiver Komponenten (A, B), zum Mischen und zur Weiterleitung der resultierenden Reaktionsmischung an eine Verteilereinheit (67) in Richtung des Infusionshohlraums (8),
- ein erstes Rückkopplungssteuermodul (75) zum Steuern - durch Einwirken auf die volumetrischen Pumpen (39, 40) - der Teil-Durchflussmengen der reaktiven Komponenten (A, B) und, als Ergebnis, der Gesamt-Durchflussmenge (Q), die zu dem Mischkopf (41, 45) geleitet wird,
- einen oder mehrere Einlasskanäle (L_{A}, L_{B}, L_{C}, ..., L_{N}), auf die die Gesamtdurchflussmenge des zu fördernden Reaktionsgemischs gemäß einer programmierten Sequenz aufgeteilt wird, bis zu jeweiligen Einlasspunkten (9), die auf dem Sperrelement (6) verteilt sind,
- Drosselmittel 20_{A}, 20_{B}, 20_{C}, ..., 20_{N}; 21_{A}, 21_{B}, 21_{C}, ..., 21_{N}) zum Schließen oder Freigeben durch Steuern des Zuflusses von Reaktionsgemisch zu den verschiedenen Einlasspunkten (9) gemäß einer programmierten Folge,
- Mittel (11) zur Überwachung des Drucks in den verschiedenen Punkten des Einlasses (9),
- nicht-invasive Durchflusswandlermittel (18_{A}, 18_{B}, 18_{C}, ..., 18_{N}), die an einem oder mehreren Einlasskanälen (L_{A}, L_{B}, L_{C}, ..., L_{N}) angebracht sind, um die jeweilige Durchflussmenge des fließenden Harzes zu erfassen,
**dadurch gekennzeichnet, dass es weiter Folgendes umfasst**
- ein zweites (80) Steuermodul, das gemäß einer zweiten Steuerebene in Rückkopplung betrieben wird, um die Eingangsdurchflussmengen an jedem Einlasspunkt (9) zu reduzieren, indem einer oder mehrere der Einlasskanäle (L_{A}, L_{B}, L_{C}, ..., L_{N}) gemäß einer eingestellten Durchflussmenge und bei Überschreiten eines voreingestellten Druckschwellenwerts kontrolliert und unabhängig voneinander gedrosselt werden, und somit den Druck an dem jeweiligen Einlasspunkt (9) zu reduzieren,
- weitere Mittel (68) zur Überwachung des Harzdrucks in einer Verteilungszone (67), stromaufwärts von der die Eingangsleitungen (L_{A}, L_{B}, Lc, ..., L_{N}) abzweigen, und,
- ein drittes, in einer Rückkopplungsschleife gesteuertes Steuermodul (85), das so beschaffen ist, dass es bei Überschreiten eines zusätzlichen voreingestellten Druckschwellenwerts an der Verteilereinheit (67) oder an mindestens einem der Einlasspunkte (11) die Gesamtdurchflussmenge verringert, die proportional zum festgestellten Anstieg des absoluten Drucks geliefert wird, indem es die Gesamtdurchflussmenge durch die einzelnen Durchflussmengen der reaktiven Komponenten (A, B) verringert, wobei sie im richtigen stöchiometrischen Verhältnis gehalten werden, und
- ein viertes Regelkreismodul (90), das so angeordnet ist, dass es im letzten Imprägnierschritt, der eine Verringerung der angeforderten Gesamtdurchflussmenge des Harzes unter mindestens eine der Betriebsgrenzen (Q_{MIN}) der jeweiligen Dosierpumpe (39, 40) erfordert, die Betriebsrate einer oder mehrerer der Pumpen (39, 40) auf einen minimalen und sicheren Betriebszustand für Effizienz und ordnungsgemäßen Betrieb reduziert, und so angeordnet ist, dass die für den abschließenden Imprägnierungsschritt erforderliche Durchflussmenge weiter verringert wird, indem ein gesteuerter Abzugsschritt aktiviert wird, der einen Strom von Reaktionsharz (A, B) aus einer oder beiden Versorgungsleitungen (35, 36) abzieht, um den Strom der jeweiligen reaktiven Komponenten (A, B) zu einem jeweiligen Reservoir (31, 32) zu befördern oder ihn zur Einlass-Saugleitung der jeweiligen Pumpe (39, 40) zu schicken.

16. Einrichtung zur direkten Infusion eines Reaktionsgemisches unter Vakuumbedingungen nach Anspruch 15, umfassend:
- eine oder mehrere Einlassöffnungen (9) zum Einführen der Reaktionsmischung in den Infusionshohlraum (8),
- mindestens eine Vakuumquelle (15), die über eine oder mehrere Saugleitungen (VL) mit dem Infusionshohlraum (8) verbunden werden kann, um in dem Infusionshohlraum (8) einen Innendruck (P_{INT}) zu erzeugen, der niedriger ist als der Außendruck (P_{EST}), der auf das Sperrelement (6) wirkt, um den Fluss der Reaktionsmischung in dem Infusionshohlraum (8) zu fördern,
- Behälter (31, 32) zur Aufnahme des Harzes (A) und des Härters (B),
- wobei die Versorgungsleitungen (35, 36) mit den volumetrischen Dosierpumpen (39, 40) verbunden sind, um Harz (A) und Härter (B) aus den Behältern (31, 32) zum Mischkopf (41) zu fördern,
- Druckstabilisierungsventilmittel (59, 60) für die Versorgungsleitungen (35, 36), die so konfiguriert sind, dass sie den Förderdruck der Pumpen (39, 40) in der Nähe des Einstellwerts geregelt halten und infolgedessen den Wirkungsgrad der Pumpen (39, 40) und den Wirkungsgrad der Durchflusssubtraktionsventile (51, 52) unabhängig von möglichen Druckstörungen entlang der Versorgungsleitungen (35, 36) aufrechterhalten,
- Ventilmittel (51, 52) zum kontrollierten Abziehen mindestens eines Teils der Durchflussmenge der Komponenten (A) und/oder (B) und zum Entfernen der überschüssigen Durchflussmenge, die entlang der Versorgungsleitungen (35, 36) fließt,
- eine Verteilereinheit (67), die geeignet ist, das Reaktionsgemisch aufzunehmen und zu verteilen,
- eine oder mehrere Infusionsleitungen (LA, L_{B}, L_{C}, ..., L_{N}), die so angeordnet sind, dass sie die Verteilereinheit (67) mit der Infusionskammer (8) für die Zufuhr der Reaktionsmischung verbinden,
- ein oder mehrere Verbindungs- und Einlasselemente (10), die an einem Ende jeder Infusionsleitung (L_{A}, L_{B}, L_{C}, ..., L_{N}) vorgesehen sind und jeweils an einer entsprechenden Einlassöffnung (9) für das Gemisch positioniert werden können,
- einen jeweiligen nicht-invasiven Durchflusswandler (18_{A}, 18_{B}, 18_{C}, ..., 18_{N}), der an einer oder mehreren der Infusionsleitungen (L_{A}, L_{B}, L_{C}, ..., L_{N}) angebracht ist,
- wobei jedes der ein oder mehreren Verbindungs- und Einlasselemente (10) mit einem Drucksensor (11) zum Erfassen und Überwachen des unter der Sperrschicht (6) am Verbindungseinlasselement (10) herrschenden Drucks versehen ist,
- wobei das Drosselmittel eine Vielzahl von Drosseleinheiten (20_{A}, 20_{B}, 20_{C}, ..., 20_{N}; 21_{A}, 21_{B} ,21_{C},...,21_{N}) umfasst, die entlang jeder Infusionsleitung (L_{A}, L_{B}, L_{C}, ..., L_{N}) angeordnet und unabhängig voneinander ansteuerbar sind, um den Abschnitt der Infusionsleitung (L_{A}, L_{B}, L_{C}, ..., L_{N}) in einstellbarer Weise bis zum Verschluss zu reduzieren, um den Durchfluss des Gemisches entsprechend den Signalen der entsprechenden Durchflussmengen-Detektoren und Drucksensoren (11) kontrolliert zu vermindern, um den Zufluss der Durchflussmenge zu steuern und eine anormale Ansammlung von Gemisch unter dem Sperrelement (6) zu vermeiden, wenn der absolute Druck in dem entsprechenden Verbindungs- und Einlasselement (10) ansteigt und sich einem voreingestellten, maximal zulässigen Wert nähert, der niedriger ist als der auf das Sperrelement (6) wirkende äußere Druck (P_{EST}).

17. Einrichtung nach Anspruch 15 oder 16, wobei das Sperrelement einen luft- und harzundurchlässigen Sperrfilm (6) umfasst, der geeignet ist, am Umfang luftdicht mit einem Umfangsbereich (7) der Form (4) verbunden zu werden, der die kontrastierende Oberfläche (3) begrenzt, bei dem die eine oder mehreren Einlassöffnungen (9) für das Reaktionsgemisch auf der Sperrschicht (6) erhalten werden, und bei dem die einstellbaren Drosseleinheiten (20_{A}, 20_{B}, 20_{C},..., 20_{N}; 21_{A}, 21_{B}, 21_{C}, ..., 21_{N}) so konfiguriert sind, dass sie den Durchfluss des Reaktionsgemisches drosseln, d. h. den Strömungsquerschnitt zum entsprechenden Einlasspunkt zu verringern und den hydraulischen Widerstand entlang der Infusionsleitungen (L_{A}, L_{B}, L_{C}, ..., L_{N}) am jeweiligen Einlasspunkt (9) entsprechend den Signalen der entsprechenden Drucksensoren (11) zu erhöhen, um eine Ablösung des Sperrfilms (6) von dem Faserverstärkungsträger (5) zu verhindern und eine anormale Ansammlung von Gemisch unter dem Sperrfilm (6) und den entsprechenden Durchflussmessern bei der Anwendung zu verhindern, um die Verteilung des Reaktionsharzes zu regulieren, und bei dem jede Infusionsleitung (L_{A}, L_{B}, L_{C}, ..., L_{N}) eine flexible Rohrleitung umfasst, und wobei die einstellbaren Drosseleinheiten (20_{A}, 20_{B}, 20_{C}, ..., 20_{N}; 21_{A}, 21_{B}, 21_{C}, ..., 21_{N}) vom pneumatisch oder elektrisch gesteuerten Typ sind, die so konfiguriert sind, dass sie die jeweilige flexible röhrenförmige Leitung (L_{A}, L_{B}, L_{C}, ..., L_{N}) entsprechend dem Durchflusswert und dem Überschreiten des absoluten Druckschwellenwerts, der von dem entsprechenden Drucksensor (11) erfasst wird, von außen zu drücken, sodass sie dem fließenden Reaktionsgemisch lokal einen kontrollierten hydraulischen Widerstand entgegensetzen.

18. Einrichtung nach einem der Ansprüche 15 bis 17, wobei die einstellbaren Drosseleinheiten (20_{A}, 20_{B}, 20_{C}, ..., 20_{N}; 21_{A}, 21_{B}, 21_{C}, ...,21_{N}) unabhängig voneinander durch ein Steuersystem mit Proportionalregelventil (29) gesteuert werden, das ein elektrisches Referenzsignal entsprechend der Erfassung der entsprechenden Durchflussmenge (falls vorhanden) und des Druckdetektors (11) in pneumatischen Druck konvertiert, oder mit einem elektrischen Proportionalantrieb gesteuert werden, so dass die jeweilige flexible Rohrleitung (L_{A}, L_{B}, L_{C}, ..., L_{N}) in dem Maße gedrosselt wird, in dem der in dem entsprechenden Verbindungs- und Eingangselement (10) erfasste Druck einen Bezugsschwellenwert überschreitet und sich einem gewünschten maximalen Schwellenwert P_{Nfilm} nähert, der der Differenz ΔP_{Nfiim} zwischen dem Druck außerhalb des Sperrfilms und dem maximal zulässigen Druck unterhalb des Verbindungs- und Einlasselements entspricht, und bei dem jede Drosseleinheit einen Pneumatikzylinder (23) umfasst, der mit einem angelenkten Hebel (24) verbunden ist, der mit einem Raddruckelement (25) versehen ist, das geeignet ist, von außen einen Schubdruck auf die entsprechende flexible Rohrleitung (L_{A}, L_{B}, L_{C},..., L_{N}) auszuüben, wobei jede Drosseleinheit einen Pneumatikzylinder (26) umfasst, an dessen Ende ein Keildruckelement (27) angeschlossen ist, das geeignet ist, von außen einen Drosseldruck auf die entsprechende flexible Rohrleitung (L_{A}, L_{B}, L_{C}, ..., L_{N}) auszuüben.

19. Einrichtung nach einem der Ansprüche 15 bis 18, wobei die Dosier- und Mischvorrichtung (39, 40, 41, 45) volumetrische Dosierpumpen (39, 40) zum Dosieren und Zuführen des Harzes (A) und der reagierenden oder härtenden Komponente (B) umfasst, die in einer geschlossenen Schleife mit Durchflussrückführung mittels stromabwärts jeder Pumpe angeordneter Durchflussmesser (43, 44) und einer Steuereinheit (CU) gesteuert werden, die das stöchiometrische Verhältnis der Komponenten steuert und aufrechterhält, wenn die der Verteilereinheit (67) über den Mischkopf (41) zuzuführende Gesamtmenge variiert, und wobei die Dosier- und Mischvorrichtung (39, 40, 41, 45) und die volumetrischen Pumpen (39, 40) in einer gesteuerten Weise antreibbar sind, um die korrekte Abgabedurchflussmenge des Mischkopfes (41) entsprechend der an dem Infusionshohlraum(8) angeforderten Menge der Reaktionsmischung zu regulieren.

20. Einrichtung nach einem der Ansprüche 15 bis 19, wobei die Ventilmittel (51, 52) Durchflussmengen-Subtraktionsventile (51, 52) umfassen, die geeignet sind, in rückkopplungsgesteuerter Weise mittels Durchflusswandlern (55, 56) einen Teil der Durchflussmenge von den Zufuhrleitungen (35, 36) der reaktiven Komponenten (A, B) zu subtrahieren und entlang von Subtraktionsleitungen (61, 62) zu befördern, und wobei die Subtraktionsleitungen (61, 62) die Durchflusssubtraktionsventile (51, 52) alternativ mit den Behältern (31, 32) der reaktiven Komponenten (A, B) oder mit den Pumpen (39, 40) über Durchflussmengenwandler (55, 56) verbinden.

21. Einrichtung nach Anspruch 20, wobei jedes Durchflussmengen-Subtraktionsventil (51, 52) einen Hydraulikkolben (106) umfasst, der mit einem Schieber (103) verbunden ist, der mit einer konischen Spitze (111) versehen ist, die so konfiguriert ist, dass sie mit der Kante eines Durchflussmengen-Partialisierungselements (105) in Eingriff kommt, wobei der Schieber (103) so konfiguriert ist, dass er die zylindrische Spitze (111) gegen das Partialisierungselement (105) drückt, um den darauf ausgeübten Hydraulikdruck zu bewirken, sodass der Durchgang der Reaktionskomponenten (A, B) innerhalb desselben Subtraktionsventils (51, 52) selektiv verhindert oder reduziert wird, wobei der entgegengesetzte Druck der reagierenden Komponenten (A, B) so beschaffen ist, dass er die zylindrische Spitze (111) des Cursors (103) von dem Partialisierungselement (105) trennt, wodurch eine kontrollierte Durchflussmenge der reagierenden Komponenten (A, B) in das Innere des Körpers der Durchflussmengen-Subtraktionsventile (51, 52) und zu den Subtraktionsleitungen (61, 62) fließen kann.

## Revendications

1. Procédé de production d'un corps composé d'un matériau composite renforcé de fibres, par perfusion d'un mélange de réaction, dans des conditions de vide, dans une cavité de perfusion (8) délimitée et séparée de l'environnement externe par un élément barrière (6) imperméable à l'air et à l'intérieur de laquelle un support de renforcement fibreux (5) est logé pour imprégnation, comprenant les étapes consistant à :
- entraîner, d'une manière commandée, en fonction d'un premier niveau de commande (75), d'un dispositif (39, 40, 41, 45) comprenant des pompes de dosage (39, 40) et une tête de mélange (41, 45) pour doser des composants réactifs (A, B),
- mélanger et apporter ledit mélange de réaction obtenu à un ensemble de distribution (67) vers ladite cavité de perfusion (8), à un débit nominal prédéterminé qui est divisé et distribué, en fonction d'une séquence programmée, entre plusieurs conduits d'entrée (L_{A}, L_{B}, L_{C}, ..., L_{N}) s'étendant jusqu'à des points d'entrée (9) respectifs, répartis sur ledit élément barrière (6),
- distribuer le mélange de réaction à un ou plusieurs points d'entrée (9) sélectionnés et activés en parallèle et/ou de manière séquentielle en fonction d'une séquence d'acheminement programmée sur la base du débit et de la quantité totale prédéfinis,
- détecter et surveiller le débit le long d'un ou plusieurs desdits conduits d'entrée (L_{A}, L_{B}, L_{C}, ..., L_{N}) au niveau des divers points d'entrée (9),
- réduire, d'une manière commandée, en fonction d'une séquence programmée, les débits entrants par un étranglement commandé et mutuellement indépendant des conduits d'entrée (L_{A}, L_{B}, L_{C}, ..., L_{N}).
**caractérisé en ce qu'il comprend en outre les étapes consistant à :**
- détecter et surveiller la pression dans les divers points d'entrée (9) activés et, lorsqu'un premier seuil de pression prédéfini est dépassé, activer un deuxième niveau de commande (80) pour réduire les débits entrants au niveau de chaque point d'entrée (9), par un étranglement commandé et mutuellement indépendant desdits conduits d'entrée (L_{A}, L_{B}, L_{C}, ..., L_{N}) pour réduire la pression, c'est-à-dire l'augmentation de pression, en réduisant l'écoulement entrant de mélange de réaction au niveau du point d'entrée (9) respectif,
- diminuer, par le biais de l'activation d'un troisième niveau de commande (85, 91), l'acheminement total de mélange de réaction, lors d'un dépassement d'un seuil de pression prédéfini respectif détecté au niveau d'au moins un des points d'entrée (9),
- détecter et surveiller la pression de mélange de réaction dans une zone de distribution (67) en amont de laquelle lesdits conduits d'entrée (L_{A}, L_{B}, Le, ..., L_{N}) bifurquent et, en cas de dépassement d'un autre seuil de pression prédéfini, activer ledit troisième niveau de commande (85, 91) qui réduit le débit total acheminé en fonction de l'augmentation de la pression absolue détectée et, lors d'un dépassement dudit seuil, baisser les débits individuels des composants réactifs (A, B) en les maintenant dans le bon rapport stoechiométrique, et
- lors de l'étape d'imprégnation finale, qui nécessite une réduction du débit total de résine acheminée, sous au moins une des limites de fonctionnement de la pompe de dosage (39, 40) respective, lancer un quatrième niveau de commande (90, 92) qui réduit la vitesse de fonctionnement d'une ou plusieurs desdites pompes (39, 40) à un état de fonctionnement minimum et sûr pour un bon fonctionnement, et le débit demandé et acheminé pour l'étape d'imprégnation finale est en outre réduit en activant une étape d'évacuation commandée qui évacue un ou les deux écoulements de composants réactifs (A, B) de la conduite d'acheminement à la tête de mélange (41) pour les réintroduire dans un récipient (31, 32) respectif ou les envoyer jusqu'à une conduite d'aspiration d'entrée de la pompe (39, 40) respective.

2. Procédé selon la revendication 1, dans lequel
- ledit support de renforcement fibreux (5) destiné à être imprégné avec ledit mélange de réaction est obtenu en agençant une ou plusieurs couches de fibres sur une surface de contraste (3) d'un moule (4),
- ledit support de renforcement fibreux (5) est appliqué sur ledit élément barrière (6) qui est imperméable à l'air et aux résines et une ou plusieurs ouvertures d'entrée (9) sont obtenues pour l'introduction du mélange de réaction dans ladite cavité de perfusion (8),
- ladite cavité de perfusion (8) est reliée à une ou plusieurs sources de vide (15) par une ou plusieurs lignes d'aspiration (VL) pour générer dans ladite cavité de perfusion (8) une pression interne (P_{INT}) qui est inférieure à une pression externe (P_{EST}) agissant sur ledit élément barrière (6), de manière à conserver l'adhérence dudit élément barrière (6) et dudit support de renforcement fibreux (5) et favoriser la diffusion de l'écoulement de mélange de réaction dans ladite cavité de perfusion (8).

3. Procédé selon la revendication 1 ou 2, dans lequel au niveau de chaque ouverture d'entrée de mélange de réaction (9) est positionné un élément d'entrée de résine de réaction (10) respectif pourvu d'un capteur de pression (11), pour détecter une pression absolue ou différentielle par rapport à la pression externe, et il est prévu de relier chaque élément d'entrée de résine de réaction (11) à un conduit d'entrée (L_{A}, L_{B}, L_{C}, ..., L_{N}) respectif audit ensemble de distribution (67) qui est alimenté en mélange de réaction d'une manière commandée par ledit dispositif (39,40,41) pour doser, mélanger et acheminer le mélange.

4. Procédé selon l'une quelconque des revendications précédentes, dans lequel ledit élément barrière comprend un film barrière (6), imperméable à l'air et aux résines qui est relié de façon périphérique d'une manière étanche à l'air audit moule (4) par un ruban adhésif double face d'étanchéité ou un élément mastic d'étanchéité, de manière à définir ladite cavité de perfusion (8), sur ledit élément barrière (6) étant ménagés lesdites ouvertures d'entrée (9) et lesdits éléments d'entrée (10) pour le mélange de réaction, dans lesquels l'écoulement entrant de mélange de réaction est réduit et régulé en fonction du dépassement d'un seuil de pression absolue à l'intérieur des éléments de liaison et d'entrée (10) correspondants, compensant les pertes de pression le long des conduits, de manière à empêcher un détachement dudit film barrière (6) dudit support de renforcement fibreux (5) et empêcher une accumulation anormale de mélange sous le film barrière (6).

5. Procédé selon l'une quelconque des revendications précédentes, dans lequel à un ou plusieurs desdits conduits d'entrée (LA, L_{B}, L_{C}, ..., L_{N}) est appliqué un transducteur de débit de type non invasif (18_{A}, 18_{B}, 18_{C}, ..., 18_{N}) respectif, tel qu'un transducteur à ultrasons ou équivalent, approprié pour détecter le débit entrant dans le même conduit d'entrée (L_{A}, L_{B}, L_{C}, ..., L_{N}) et dans lequel le long d'un ou plusieurs desdits conduits d'entrée (L_{A}, L_{B}, L_{C}, ..., L_{N}) pourvus de transducteurs de débit (18_{A}, 18_{B}, 18_{C}, ..., 18_{N}), le débit dudit mélange de réaction auxdites ouvertures d'entrée (9) et auxdits éléments d'entrée (10) est réduit et régulé en fonction de la valeur de débit définie dans la séquence de fonctionnement programmée.

6. Procédé selon l'une quelconque des revendications précédentes, dans lequel ledit mélange de réaction est obtenu en dosant et mélangeant un composant de résine (A) et un composant de réaction ou durcissement (B) à l'aide de pompes volumétriques (39, 40), et d'une tête de mélange (41), dans laquelle ladite unité de commande (CU) commande et maintient le rapport stoechiométrique des composants à mesure que la quantité à acheminer par le biais de la tête de mélange (41) varie en fonction des débits détectés par les transducteurs de débit (43, 44) situés en aval de chaque pompe (39, 40), et dans laquelle les débits partiels des composants de réaction et, en conséquence, le débit total (Q) à la tête de mélange (41) sont régulés par ladite unité de commande (CU) configurée avec un premier module de commande à boucle fermée (75), ledit premier module de commande (75) agissant sur lesdites pompes volumétriques (39, 40) pour maintenir les débits individuels (Q_{A}, Q_{B}) du composant (A) et du composant (B) autour de valeurs de référence (Q_{A,REF}, Q_{B,REF}) respectives pour le composant (A) et pour le composant (B), lesdites valeurs de référence (Q_{A,REF}, Q_{B,REF}) étant prédéfinies dans ladite unité de commande (CU).

7. Procédé selon l'une quelconque des revendications précédentes, dans lequel le deuxième module de commande (80) sert à
- surveiller et détecter la pression à l'intérieur de chaque élément de liaison et d'entrée (10) par le biais des capteurs de pression (11) respectifs, et
- générer une baisse de pression commandée le long de la ligne d'alimentation jusqu'au point d'entrée (9) en étranglant les conduits d'entrée (L_{A}, L_{B}, Le, ..., L_{N}) d'une manière commandée mutuellement indépendante sur la base des signaux des capteurs de pression (11) correspondants pour réduire l'écoulement entrant de mélange de réaction correspondant en fonction d'une valeur de débit programmée et d'une augmentation de pression absolue dépassant un seuil défini dans les éléments de liaison et d'entrée (10) correspondants, pour maintenir une différence de pression entre l'extérieur et l'intérieur de ladite cavité de perfusion (8) au niveau du point d'entrée de telle sorte que la pression absolue au niveau desdits points d'entrée ne dépasse pas, d'une valeur différentielle de pression souhaitée, une valeur maximale admissible prédéfinie qui est inférieure à ladite pression externe (PEST) agissant sur ledit élément barrière (6).

8. Procédé selon l'une quelconque des revendications précédentes, dans lequel chaque ligne de perfusion (L_{A}, L_{B}, L_{C}, ..., L_{N}) comprend un conduit tubulaire flexible et dans lequel pour chaque ligne de perfusion (L_{A}, L_{B}, L_{C}, ..., L_{N}) une unité d'étranglement réglable commandée pneumatiquement ou électriquement (20_{A}, 20_{B}, 20_{C}, ..., 20_{N}; 21_{A}, 21_{B}, 21_{C},..., 21_{N}) respective est actionnée indépendamment des autres, agissant pour comprimer extérieurement le conduit tubulaire flexible (L_{A}, L_{B}, L_{C}, ..., L_{N}) respectif en fonction d'une séquence d'activation définie, d'une valeur de débit programmée et en fonction du dépassement de la valeur de seuil de pression définie détectée par le capteur de pression (11) correspondant, de manière à opposer une résistance hydraulique commandée localement au mélange de réaction en écoulement et dans lequel chaque ligne de perfusion (L_{A}, L_{B}, L_{C}, ..., L_{N}) comprend un conduit tubulaire flexible et dans lequel pour une ou plusieurs lignes de perfusion (L_{A}, L_{B}, L_{C}, ..., L_{N}), indépendamment les unes des autres, une unité d'étranglement réglable commandée pneumatiquement ou électriquement (20 _{A}, 20_{B}, 20_{C}, ..., 20_{N}; 21_{A}, 21_{B},21_{C}, ..., 21_{N}) respective, agissant pour comprimer extérieurement le conduit tubulaire flexible (L_{A}, L_{B}, L_{C}, ..., L_{N}) respectif en fonction d'une séquence d'activation définie, en fonction d'une instruction à des valeurs de compression croissantes successives pour réduire le débit d'écoulement en fonction des valeurs détectées par le biais du transducteur de débit non invasif (18_{A}, 18_{B}, 18_{C}, ..., 18_{N}) correspondant par l'opérateur ou en fonction d'une valeur de débit programmée et détectée en retour par ledit transducteur de débit non invasif (18_{A}, 18_{B}, 18_{C}, ..., 18_{N}) en fonction de la séquence pour remplir ladite cavité maintenue sous vide, dans lequel ladite unité d'étranglement réglable (20_{A}, 20_{B}, 20_{C}, ..., 20_{N}; 21_{A}, 21_{B}, 21_{C}, ..., 21_{N}) sert à réduire la section de passage dans le conduit tubulaire flexible (L_{A}, L_{B}, L_{C}, ..., L_{N}) respectif et est commandée d'une manière proportionnelle par un actionneur électrique ou un clapet (29) qui convertit un signal de référence électrique en pression pneumatique, et est commandée à l'aide d'un système de commande de type marche/arrêt pour étrangler ledit conduit tubulaire flexible (L_{A}, L_{B}, L_{C}, ..., L_{N}) jusqu'à fermeture, limitant ainsi complètement l'écoulement entrant de mélange de réaction jusqu'au point d'entrée (9), dans le cas où ledit point d'entrée (9) n'est pas activé en fonction de la séquence d'entrée programmée.

9. Procédé selon la revendication 8, dans lequel ladite unité d'étranglement réglable (20_{A}, 20_{B}, 20_{C}, ..., 20_{N}; 21_{A}, 21_{B} ,21_{C},...,21_{N}) sert à réduire la section de passage dans le conduit tubulaire flexible (L_{A}, L_{B}, L_{C}, ..., L_{N}) respectif et est commandée d'une manière proportionnelle par un actionneur électrique ou un clapet (29) qui augmente proportionnellement à la différence entre la pression détectée dans ledit élément de liaison et d'entrée (10) correspondant, et une valeur de seuil définissable ΔP_{Nmax} correspondant à la différence entre la pression à l'extérieur du film barrière et la pression admissible maximale sous ledit élément de liaison et d'entrée (10) correspondant.

10. Procédé selon une ou plusieurs des revendications précédentes, dans lequel il est prévu, par le biais de l'unité de commande (CU) configurée avec ledit troisième module à boucle fermée (85, 91), de réduire les débits partiels des composants de réaction et, en conséquence, le débit total (Q) à ladite tête de mélange (41), au cas où la pression mesurée en aval de ladite tête de mélange (41) dépasse une valeur de limite de pression préalablement définie (P_{LIM}), dans lequel la pression est mesurée en aval de ladite tête de mélange (41) par un transducteur de pression (68).

11. Procédé selon une ou plusieurs des revendications précédentes, dans lequel il est prévu, par le biais de l'unité de commande (CU) configurée avec ledit troisième module à boucle fermée (85, 91), de réduire les débits partiels des composants de réaction et, en conséquence, le débit total (Q) envoyé à ladite tête de mélange (41), au cas où la pression mesurée au niveau d'au moins un desdits points d'entrée (10) dépasse une valeur de limite de pression préalablement définie (P_{LIM}).

12. Procédé selon l'une quelconque des revendications précédentes, dans lequel des clapets de stabilisation de pression (59, 60) sont agencés pour réguler le différentiel de pression fourni desdites pompes (39, 40) de manière à stabiliser la hauteur de pression et à garantir le bon fonctionnement dudit dispositif de dosage (39, 40, 41) et, spécifiquement, desdits clapets de soustraction de débit (51, 52) et desdites pompes de dosage (39, 40) lors d'un fonctionnement sous leurs limites de fonctionnement respectives.

13. Procédé selon l'une quelconque des revendications précédentes, dans lequel des clapets de soustraction ou d'évacuation de débit (51, 52) sont agencés configurés pour réduire en outre le débit acheminé à ladite tête de mélange (41), lorsqu'il est nécessité une valeur de débit qui soit inférieure à un seuil de fonctionnement à débit minimum (Q_{MIN}) desdites pompes de dosage (39, 40) et dans lequel, par l'unité de commande (CU) configurée avec ledit quatrième module de commande à boucle fermée (90), le débit minimum de chacun des deux composants réactifs (A, B) envoyé à ladite tête de mélange (41) est réduit indépendamment, dans le cas où le débit nécessité se révèle inférieur audit débit minimum de fonctionnement sûr (Q_{MIN}) de chaque pompe de dosage (39, 40), en activant une évacuation commandée dudit débit minimum (Q_{MIN}) acheminé par lesdites pompes de dosage (39, 40), et dans lequel l'unité de commande (CU) configurée avec un module de commande à boucle fermée (75) ordonne le débit minimum pour chaque pompe de dosage (39, 40) indépendamment de l'un des deux composants réactifs (A, B), dans le cas où le débit nécessité se révèle inférieur audit débit minimum de fonctionnement sûr (Q_{MIN}) de chaque pompe de dosage (39, 40).

14. Procédé selon une ou plusieurs des revendications précédentes, dans lequel, il est prévu, dans un noeud (85) dudit niveau de commande (85, 91), d'ajouter ensemble des valeurs de dépassement de pression prédéfinie qui sont détectées par lesdits transducteur de pression (68) et capteur de pression (11) pour la pression absolue au niveau de chaque ouverture d'entrée (9) et au niveau du point d'acheminement depuis la tête de mélange (41), lesdites valeurs ordonnant une réduction du débit total acheminé, et il est prévu d'apporter à la détection desdits transducteur et capteur un gain et une anticipation à action directe spécifiques de l'intervention attendue sur les unités d'étranglement réglables (20_{A}, 20_{B}, 20_{C}, ..., 20_{N}; 21_{A}, 21_{B}, 21_{C}, ..., 21_{N}) respectives de manière à appliquer un effet de régulation de débit au préalable sur une ligne de perfusion (L_{N}) par rapport aux autres lignes de perfusion.

15. Appareil de production d'un corps composé d'un matériau composite renforcé de fibres, par perfusion d'un mélange de réaction, dans des conditions de vide, comprenant :
- un moule (4) présentant une surface de contraste (3) appropriée pour recevoir une ou plusieurs couches de fibres définissant un support de renforcement fibreux (5) destiné à être imprégné avec ledit mélange de réaction,
- un élément barrière (6) imperméable à l'air et à la résine approprié pour appuyer sur ledit support de renforcement fibreux (5) et agencé pour délimiter une cavité de perfusion (8) séparée de l'environnement externe,
- un dispositif (39, 40, 41, 45, 75) comprenant des pompes (39, 40), une tête de mélange (41, 45) pour doser des composants réactifs (A, B), mélanger et envoyer ledit mélange de réaction obtenu à un ensemble de distribution (67) vers ladite cavité de perfusion (8),
- un premier module de commande à rétroaction (75) pour commander - en agissant sur lesdites pompes volumétriques (39, 40) - les débits partiels desdits composants réactifs (A, B) et, en conséquence, le débit total (Q) envoyés à ladite tête de mélange (41,45),
- un ou plusieurs conduits d'entrée (L_{A}, L_{B}, L_{C}, ..., L_{N}) entre lesquels le débit total du mélange de réaction à transporter est divisé en fonction d'une séquence programmée, jusqu'à des points d'entrée (9) respectifs répartis sur ledit élément barrière (6),
- des moyens d'étranglement (20_{A}, 20_{B}, 20_{C}, ..., 20_{N}; 21_{A}, 21_{B}, 21_{C}, ..., 21_{N}) pour fermer ou permettre, par commande, l'écoulement entrant de mélange de réaction jusqu'auxdits divers points d'entrée (9) en fonction d'une séquence programmée,
- des moyens (11) pour surveiller la pression dans les divers points d'entrée (9),
- des moyens transducteurs de débit de type non invasif (18_{A}, 18_{B}, 18_{C}, ..., 18_{N}) appliqués à un ou plusieurs conduits d'entrée (L_{A}, L_{B}, L_{C}, ..., L_{N}) afin de détecter le débit de résine en écoulement respectif,
**caractérisé en ce qu'il comprend en outre**
- un deuxième module de commande (80), conformément à un deuxième niveau de commande fonctionnant en rétroaction, pour réduire les débits entrants au niveau de chaque point d'entrée (9) - en étranglant d'une manière commandée et mutuellement indépendante un ou plusieurs desdits conduits d'entrée (L_{A}, L_{B}, L_{C}, ..., L_{N}) en fonction d'un débit défini et lorsqu'un seuil de pression prédéfini est dépassé - et réduisant ainsi la pression, au niveau du point d'entrée (9) respectif,
- des moyens supplémentaires (68) pour surveiller la pression de résine dans une zone de distribution (67) en amont de laquelle lesdits conduits d'entrée (L_{A}, L_{B}, L_{C}, ..., L_{N}) bifurquent et,
- un troisième module de commande (85) commandé en boucle de rétroaction agencé pour réduire - dans le cas où un seuil de pression prédéfini supplémentaire au niveau dudit ensemble de distribution (67) ou au moins au niveau d'un des points d'entrée (11) est dépassé - le débit total acheminé proportionnellement à l'augmentation de la pression absolue détectée, en diminuant le débit total par le biais des débits individuels des composants réactifs (A, B) les maintenant dans le bon rapport stoechiométrique, et
- un quatrième module de commande à boucle (90) agencé pour réduire - lors de l'étape d'imprégnation finale qui nécessite une réduction du débit total de résine demandée sous au moins une des limites de fonctionnement (Q_{MIN}) de la pompe de dosage (39, 40) respective - la vitesse de fonctionnement d'une ou plusieurs desdites pompes (39, 40) à un état de fonctionnement minimum et sûr pour un fonctionnement efficace et bon, et agencé pour encore réduire le débit nécessité pour l'étape d'imprégnation finale en activant une étape d'évacuation commandée, qui évacue un écoulement de résine de réaction (A, B) d'une ou des deux lignes d'alimentation (35, 36) pour transporter l'écoulement des composants réactifs (A, B) respectifs vers un réservoir (31, 32) respectif ou l'envoyer à la ligne d'aspiration d'entrée de la pompe (39, 40) respective.

16. Appareil pour perfusion directe dans des conditions de vide d'un mélange de réaction selon la revendication 15, comprenant :
- une ou plusieurs ouvertures d'entrée (9) pour l'introduction du mélange de réaction dans ladite cavité de perfusion (8),
- au moins une source de vide (15) pouvant être reliée à ladite cavité de perfusion (8) via une ou plusieurs lignes d'aspiration (VL) afin de générer dans ladite cavité de perfusion (8) une pression interne (P_{INT}) qui est inférieure à la pression externe (P_{EST}) agissant sur ledit élément barrière (6), pour favoriser l'écoulement de mélange de réaction dans ladite cavité de perfusion (8),
- des récipients (31, 32) pour contenir la résine (A) et l'agent de durcissement (B),
- lesdites lignes d'alimentation (35, 36) reliées auxdites pompes de dosage volumétriques (39, 40) pour transporter la résine (A) et l'agent de durcissement (B) depuis lesdits récipients (31, 32) jusqu'à ladite tête de mélange (41),
- des moyens formant clapets de stabilisation de pression (59, 60) pour lesdites lignes d'alimentation (35, 36), configurés pour conserver la pression d'acheminement desdites pompes (39, 40) commandée proche de la valeur de réglage et, en conséquence, pour maintenir l'efficacité desdites pompes (39, 40) et l'efficacité des clapets de soustraction de débit (51, 52), indépendamment de perturbations de pression possibles le long desdites lignes d'alimentation (35, 36),
- des moyens formant clapet (51, 52), pour évacuer d'une manière commandée au moins une partie de débit desdits composants (A) et/ou (B) et éliminer l'excès de débit qui s'écoule le long desdites lignes d'alimentation (35, 36),
- un ensemble de distribution (67), approprié pour recevoir et distribuer le mélange de réaction,
- une ou plusieurs lignes de perfusion (LA, L_{B}, L_{C}, ..., L_{N}) agencées pour relier ledit ensemble de distribution (67) à ladite chambre de perfusion (8) pour l'apport dudit mélange de réaction,
- un ou plusieurs éléments de liaison et d'entrée (10) situés au niveau d'une extrémité de chaque ligne de perfusion (L_{A}, L_{B}, L_{C}, ..., L_{N}) et chacun étant positionnable sur une ouverture d'entrée (9) respective pour le mélange,
- un transducteur de débit non invasif (18_{A}, 18_{B}, 18_{C}, ..., 18_{N}) respectif étant appliqué à une ou plusieurs desdites lignes de perfusion (L_{A}, L_{B}, L_{C}, ..., L_{N}),
- chacun desdits un ou plusieurs éléments de liaison et d'entrée (10) étant pourvu d'un capteur de pression (11) pour détecter et surveiller la pression présente sous le film barrière (6) au niveau de l'élément de liaison d'entrée (10),
- dans lequel lesdits moyens d'étranglement comprennent une pluralité d'unités d'étranglement (20_{A}, 20_{B}, 20_{C}, ..., 20_{N}; 21_{A}, 21_{B} ,21_{C},...,21_{N}) positionnées le long de chaque ligne de perfusion (L_{A}, L_{B}, L_{C}, ..., L_{N}), et pouvant être entraînées indépendamment les unes des autres pour réduire la section de ladite ligne de perfusion (L_{A}, L_{B}, L_{C}, ..., L_{N}) d'une manière réglable jusqu'à la fermeture, afin de réduire d'une manière commandée le passage de mélange en fonction des signaux des détecteurs de débit et capteurs de pression (11) correspondants, de commander l'écoulement entrant de débit et d'éviter une accumulation anormale de mélange sous ledit élément barrière (6) lorsque la pression absolue dans l'élément de liaison et d'entrée (10) correspondant augmente et se rapproche d'une valeur admissible maximale prédéfinie qui est inférieure à ladite pression externe (P_{EST}) agissant sur ledit élément barrière (6).

17. Appareil selon la revendication 15 ou 16, dans lequel ledit élément barrière comprend un film barrière (6) imperméable à l'air et aux résines approprié pour être relié de façon périphérique d'une manière étanche à l'air à une zone périphérique (7) dudit moule (4) qui délimite ladite surface de contraste (3), dans lequel lesdites une ou plusieurs ouvertures d'entrée (9) pour le mélange de réaction sont obtenues sur ledit film barrière (6), et dans lequel lesdites unités d'étranglement réglables (20_{A}, 20_{B}, 20_{C},..., 20_{N}; 21_{A}, 21_{B}, 21_{C}, ..., 21_{N}) sont configurées pour étrangler l'écoulement de mélange de réaction, c'est-à-dire pour réduire la section d'écoulement vers le point d'entrée correspondant et augmenter la résistance hydraulique le long des lignes de perfusion (L_{A}, L_{B}, L_{C}, ..., L_{N}) au niveau du point d'entrée (9) respectif en fonction des signaux des capteurs de pression (11) correspondants, pour empêcher un détachement dudit film barrière (6) dudit support de renforcement fibreux (5) et empêcher une accumulation anormale de mélange sous le film barrière (6) et des débitmètres correspondants, si appliqués, pour réguler la distribution de ladite résine de réaction, et dans lequel chaque ligne de perfusion (L_{A}, L_{B}, L_{C}, ..., L_{N}) comprend un conduit tubulaire flexible et dans lequel lesdites unités d'étranglement réglables (20_{A}, 20_{B}, 20_{C}, ..., 20_{N}; 21_{A}, 21_{B}, 21_{C}, ..., 21_{N}) sont du type commandé pneumatiquement ou électriquement, configurées pour comprimer extérieurement le conduit tubulaire flexible (L_{A}, L_{B}, L_{C}, ..., L_{N}) respectif en fonction de la valeur de débit et du dépassement du seuil de pression absolue détectée par le capteur de pression (11) correspondant, de manière à opposer localement une résistance hydraulique commandée au mélange de réaction en écoulement.

18. Appareil selon l'une quelconque des revendications 15 à 17, dans lequel lesdites unités d'étranglement réglables (20_{A}, 20_{B}, 20_{C}, ..., 20_{N}; 21_{A}, 21_{B}, 21_{C}, ...,21_{N}) sont commandées indépendamment les unes des autres par un système de commande avec un clapet de commande proportionnel (29) qui convertit un signal électrique de référence, en fonction de la détection du débit correspondant (si présent) et du détecteur de pression (11), en pression pneumatique ou avec un actionneur électrique proportionnel, de manière à étrangler le conduit tubulaire flexible (L_{A}, L_{B}, L_{C}, ..., L_{N}) respectif plus la pression détectée dans l'élément de liaison et d'entrée (10) correspondant dépasse un seuil de référence et s'approche d'un seuil maximum défini souhaité P_{Nfilm} correspondant à la différence ΔP_{Nfiim} entre la pression à l'extérieur du film barrière et la pression admissible maximale sous l'élément de liaison et d'entrée, et dans lequel chaque unité d'étranglement comprend un cylindre pneumatique (23) relié à un levier articulé (24) pourvu d'un élément de pressage de roue (25) approprié pour exercer extérieurement une pression de poussée sur le conduit tubulaire flexible (L_{A}, L_{B}, L_{C},..., L_{N}) correspondant, chaque unité d'étranglement comprenant un cylindre pneumatique (26) à l'extrémité duquel est relié un élément de pression calée (27) qui est approprié pour exercer extérieurement une pression d'étranglement sur le conduit tubulaire flexible (L_{A}, L_{B}, L_{C}, ..., L_{N}) correspondant.

19. Appareil selon l'une quelconque des revendications 15 à 18, dans lequel ledit dispositif de dosage et de mélange (39, 40, 41, 45) comprend des pompes de dosage volumétriques (39, 40) pour doser et apporter ladite résine (A) et ledit composant de réaction ou de durcissement (B), commandées dans une boucle fermée en rétroaction de débit à l'aide de débitmètres (43, 44) situés en aval de chaque pompe et une unité de commande (CU) qui commande et maintient le rapport stoechiométrique des composants lorsque la quantité totale à acheminer à l'ensemble de distribution (67) par le biais de la tête de mélange (41) varie, et dans lequel le dispositif de dosage et de mélange (39, 40, 41, 45) et lesdites pompes volumétriques (39, 40) peuvent être entraînés d'une manière commandée pour réguler le bon débit d'acheminement de tête de mélange (41) en fonction de la quantité de mélange de réaction demandée au niveau de la cavité de perfusion (8).

20. Appareil selon l'une quelconque des revendications 15 à 19, dans lequel lesdits moyens formant clapets (51, 52) comprennent des clapets de soustraction de débit (51, 52), appropriés pour soustraire, d'une manière commandée en rétroaction à l'aide de transducteurs de débit (55, 56), une partie du débit desdites lignes d'alimentation (35, 36) des composants réactifs (A, B) et la transporter le long de lignes de soustraction (61, 62), et dans lequel lesdites lignes de soustraction (61, 62) relient lesdits clapets de soustraction de débit (51, 52) en variante auxdits récipients (31, 32) des composants réactifs (A, B) ou auxdites pompes (39, 40) par le biais des transducteurs de débit (55, 56).

21. Appareil selon la revendication 20, dans lequel chaque clapet de soustraction de débit (51, 52) comprend un piston hydraulique (106), relié à un curseur (103) pourvu d'une pointe conique (111) configurée pour entrer en prise avec le bord d'un élément de partialisation de débit (105), ledit curseur (103) étant configuré pour presser ladite pointe conique (111) contre ledit élément de partialisation (105) pour un effet de la pression hydraulique exercée sur celle-ci, de manière à empêcher ou réduire sélectivement le passage des composants de réaction (A, B) dans le même clapet de soustraction (51, 52), la pression de contraste desdits composants de réaction (A, B) étant telle qu'elle sépare ladite pointe conique (111) du curseur (103) dudit élément de partialisation (105), permettant à un débit commandé desdits composants de réaction (A, B) de s'écouler à l'intérieur du corps desdits clapets de soustraction de débit (51, 52) et vers lesdites lignes de soustraction (61, 62).
